# EUROPEAN PATENT APPLICATION

(11) **EP 3 806 345 A1**
(43) Date of publication of application: **14.04.2021**
(21) Application number: 19826632.2
(22) Date of filing: 26.06.2019
(51) Int. Cl.: H04B 7/0413

(54) **BEAMFORMING TRAINING METHOD AND DEVICE**

(30) Priority: 26.06.2018 CN 201810671028
(71) Applicant: Huawei Technologies Co., Ltd., Longgang Shenzhen, Guangdong 518129 (CN)
(72) Inventor: LI, Yanchun, Shenzhen, Guangdong 518129 (CN)
(74) Representative: Pfenning, Meinig & Partner mbB
(86) International application number: PCT/CN2019/092905
(87) International publication number: WO 2020/001454

(57) **Abstract**

This application provides a beamforming training method and apparatus. The method includes: sending, by an initiating device, first indication information, where the first indication information is used to indicate a resource corresponding to each of a plurality of transmit beams of the initiating device, and the resource includes a time domain resource and/or a frequency domain resource; sending, by the initiating device, a reference signal through each transmit beam; and detecting, by the initiating device on the resource corresponding to each transmit beam, feedback information sent by a responding device, where the feedback information is determined by the responding device based on the reference signal sent through each transmit beam. In embodiments of this application, when the initiating device detects, by using a high-gain receive beam, the feedback information sent by the responding device, an insufficiency of uplink transmit power of the responding device can be compensated for, so that the initiating device can receive the feedback information sent by the responding device. Therefore, according to the embodiments of this application, a prior-art problem of insufficient uplink coverage can be resolved, thereby improving beamforming training (BFT) performance.

## Description

This application claims priority to Chinese Patent Application No. 201810671028.6, filed with the China National Intellectual Property Administration on June 26, 2018 and entitled "BEAMFORMING TRAINING METHOD AND APPARATUS", which is incorporated herein by reference in its entirety.

### TECHNICAL FIELD

This application relates to the communications field, and in particular, to a beamforming training method and apparatus.

### BACKGROUND

In high-frequency (for example, 60 GHz) communication, especially in a millimeter-wave band, attenuation of a transmit signal is far greater than that in a case of a relatively low frequency. To resist relatively high signal attenuation, in the high-frequency communication, beamforming (beamforming, BF) of a directional antenna is mainly used to improve an antenna gain. Different from a traditional omnidirectional antenna, the directional antenna can concentrate transmitted electromagnetic wave energy in a relatively narrow direction angle, and a receive antenna can also adjust a receive direction of the receive antenna to a relatively narrow direction angle. In this way, gains of a transmit antenna and the receive antenna can be improved, and a path loss can be effectively reduced. However, only after performing a series of steps, a transmitter and a receiver of data can perform matching between an optimal transmit beam of the transmitter and an optimal receive beam of the receiver, to obtain a maximum gain. The process is referred to as beamforming training (beamforming training, BFT). The process is implemented by the receiver and the transmitter by transmitting bidirectional sector sweep frames.

However, in the BFT process, when training capabilities and/or transmit power of the transmitter and the receiver are/is different, uplink coverage and downlink coverage are asymmetric. For example, a signal sent by a party with higher transmit power can be received by a peer end, but a signal sent by a party with lower transmit power cannot be received by a peer end. This affects BFT performance.

Therefore, how to improve the BFT performance becomes an urgent problem to be resolved.

### SUMMARY

This application provides a beamforming training method and apparatus. The method can improve BFT performance.

According to a first aspect, a beamforming training method is provided. The method includes:

An initiating device sends first indication information. The first indication information is used to indicate a resource corresponding to each of a plurality of transmit beams of the initiating device, and the resource includes a time domain resource and/or a frequency domain resource.

The initiating device sends a reference signal through each transmit beam.

The initiating device detects, on the resource corresponding to each transmit beam, feedback information sent by a responding device. The feedback information is determined by the responding device based on the reference signal sent through each transmit beam.

Specifically, in this embodiment of this application, the initiating device sends the first indication information and the plurality of reference signals. When receiving the first indication information, the responding device can obtain, by using the first indication information, the resources corresponding to the plurality of transmit beams. The responding device selects, by measuring the reference signals, a resource corresponding to a beam whose reference signal has the highest strength, to feed back information. For example, when the responding device learns, through measurement, that strength of a reference signal sent through a beam 1 is higher, the responding device may send the feedback information to the initiating device on a resource corresponding to the beam 1. When the initiating device detects, on the resource corresponding to the beam 1 by using a high-gain receive beam, the feedback information sent by the responding device, an insufficiency of uplink transmit power of the responding device can be compensated for, so that the initiating device can receive the feedback information sent by the responding device. Therefore, according to this embodiment of this application, a prior-art problem of insufficient uplink coverage can be resolved, thereby improving BFT performance.

According to a second aspect, a beamforming training method is provided. The method includes:

An initiating device sends a first frame. The first frame includes first indication information and a plurality of reference signals. The first indication information is used to indicate a resource corresponding to each of a plurality of transmit beams of the initiating device, the resource includes a time domain resource and/or a frequency domain resource, and the plurality of reference signals are sent by the initiating device through the plurality of transmit beams.

The initiating device detects, on the resource corresponding to each transmit beam, feedback information sent by a responding device. The feedback information is determined by the responding device based on the plurality of reference signals sent by the initiating device.

Specifically, in this embodiment of this application, the initiating device sends the first frame. When receiving the first frame, the responding device can obtain, by using the first indication information, the resources corresponding to the plurality of transmit beams. The responding device selects, by measuring the reference signals, a resource corresponding to a beam whose reference signal has the highest strength, to feed back information. For example, when the responding device learns, through measurement, that strength of a reference signal sent through a beam 1 is higher, the responding device may send the feedback information to the initiating device on a resource corresponding to the beam 1. When the initiating device detects, on the resource corresponding to the beam 1 by using a high-gain receive beam, the feedback information sent by the responding device, an insufficiency of uplink transmit power of the responding device can be compensated for, so that the initiating device can receive the feedback information sent by the responding device. Therefore, according to this embodiment of this application, a prior-art problem of insufficient uplink coverage can be resolved, thereby improving BFT performance.

It should be understood that, in the embodiments of this application, the plurality of reference signals may be expressed as at least one reference signal. For example, the at least one reference signal may include one reference signal, two reference signals, or more reference signals. The embodiments of this application are not limited thereto.

It should be understood that, in the embodiments of this application, a quantity of reference signals may correspond to a quantity of transmit beams, and one transmit beam may be used to transmit one reference signal. In the embodiments of this application, the plurality of transmit beams may also be expressed as at least one transmit beam, and the at least one transmit beam may include one transmit beam, two transmit beams, or more transmit beams. The embodiments of this application are not limited thereto.

With reference to the first aspect or the second aspect, in a possible implementation,
that the initiating device detects, on the resource corresponding to each transmit beam, feedback information sent by a responding device includes:

The initiating device detects, on the resource corresponding to each transmit beam by using a receive beam corresponding to the transmit beam, the feedback information sent by the responding device.

A receive beam corresponding to one transmit beam meets at least one of the following conditions:

### Condition 1:

The receive beam corresponding to the transmit beam has reciprocity with the transmit beam.

It should be understood that, in the embodiments of this application, when a directivity pattern of the receive beam may be the same as a directivity pattern of the transmit beam, it may be considered that the receive beam has reciprocity with the transmit beam.

Alternatively, when a directivity pattern of the receive beam may be the same as or similar to a directivity pattern of the transmit beam (for example, a difference between gains of signals at angles in a relatively strong signal direction is less than a threshold, for example, 3 dB), it may be considered that the receive beam has reciprocity with the transmit beam.

Alternatively, the receive beam is wider than the transmit beam and covers a transmit beam direction. For example, half-power beamwidth (HPBW) of the receive beam is greater than HPBW of the transmit beam, and a direction angle of the receive beam is the same as a direction angle of the transmit beam. Further, a beam gain of the receive beam is limited to being not less than a value obtained by subtracting a preset value from a beam gain of the transmit beam.

### Condition 2:

A coverage angle range of the receive beam corresponding to the transmit beam includes a coverage angle range of the transmit beam.

Specifically, the coverage angle range of the receive beam corresponding to the transmit beam may be greater than the coverage angle range of the transmit beam.

Optionally, a plurality of transmit beams may correspond to a same receive beam. In other words, a coverage angle range of the receive beam may include coverage angle ranges of the plurality of transmit beams. Optionally, receiving time and/or receive frequency domains corresponding to the plurality of transmit beams are the same.

### Condition 3:

A distance between an antenna of the receive beam corresponding to the transmit beam and an antenna of the transmit beam meets a preset distance condition.

For example, a distance between the antenna of the receive beam corresponding to the transmit beam and the antenna of the transmit beam is the shortest or is less than a preset distance threshold.

In actual implementation, it may be agreed in a protocol that the receive beam corresponding to the transmit beam meets one of the foregoing conditions or meets a plurality of the foregoing conditions.

With reference to the first aspect or the second aspect, in a possible implementation, a gain of the receive beam is higher than a gain of a beam used to send the first indication information.

In the embodiments of this application, the high-gain receive beam may be used to compensate for the insufficiency of the uplink transmit power of the responding device, so that the initiating device can receive the feedback information sent by the responding device. Therefore, according to the embodiments of this application, the prior-art problem of the insufficient uplink coverage can be resolved, thereby improving the BFT performance.

With reference to the first aspect or the second aspect, in a possible implementation, a gain of the transmit beam is higher than the gain of the beam used to send the first indication information.

In the embodiments of this application, because the receive beam corresponds to the transmit beam, when the gain of the transmit beam is relatively high, the gain of the receive beam is also relatively high. Therefore, in the embodiments of this application, the high-gain receive beam may be used to compensate for the insufficiency of the uplink transmit power of the responding device, so that the initiating device can receive the feedback information sent by the responding device. Therefore, according to the embodiments of this application, the prior-art problem of the insufficient uplink coverage can be resolved, thereby improving the BFT performance.

With reference to the first aspect or the second aspect, in a possible implementation, the feedback information is used to indicate an optimal transmit beam in the plurality of transmit beams.

With reference to the first aspect or the second aspect, in a possible implementation, the first indication information includes at least one piece of the following information: indication information of each transmit beam, a start time of the time domain resource, duration of the time domain resource, slot information corresponding to the time domain resource, a start frequency of the frequency domain resource, a frequency domain width of the frequency domain resource, and a channel number corresponding to the frequency domain resource.

It should be understood that, in the embodiments of this application, specific content of the first indication information is not limited to the foregoing listed information, provided that the first indication information can indicate the resource corresponding to each transmit beam. A person skilled in the art may make various variations to the first indication information based on the description of this application, and such a modification also falls within the protection scope of the embodiments of this application.

With reference to the first aspect or the second aspect, in a possible implementation, the first frame is a sector sweep frame, a beacon frame, or a directional multi-gigabit DMG beacon frame.

With reference to the first aspect or the second aspect, in a possible implementation, the first indication information is carried in a sector sweep frame, a beacon frame, or a directional multi-gigabit DMG beacon frame.

With reference to the first aspect or the second aspect, in a possible implementation, that the initiating device sends the reference signal through each transmit beam includes:

The initiating device simultaneously sends reference signals through at least two transmit beams. Reference signal sequences in any two of the at least two transmit beams have a low correlation or a low shift correlation, or are orthogonal to each other.

With reference to the first aspect or the second aspect, in a possible implementation, the plurality of transmit beams include a plurality of transmit beam sets that are in one-to-one correspondence with a plurality of radio frequency channels. Each transmit beam set includes at least one transmit beam, and
receiving time periods corresponding to two transmit beams belonging to different transmit beam sets do not overlap, partially overlap, or completely overlap.

With reference to the first aspect or the second aspect, in a possible implementation, the plurality of transmit beams belong to a first transmit beam group. The method further includes:

The initiating device sends second indication information. The second indication information is used to indicate a resource corresponding to each transmit beam in a second transmit beam group. The second transmit beam group includes a plurality of transmit beams, and transmit beams in the first transmit beam group are different from transmit beams in the second transmit beam group.

The initiating device sends a reference signal through each transmit beam in the second transmit beam group.

The initiating device detects, in a receiving time period corresponding to each transmit beam in the second transmit beam group, the feedback information sent by the responding device. The feedback information is used to indicate an optimal transmit beam in the second transmit beam group.

With reference to the first aspect or the second aspect, in a possible implementation, the resource is a time domain resource.

A time at which the initiating device sends the second indication information is later than a time of a receive time domain resource corresponding to each transmit beam in the first transmit beam group.

Alternatively,
a time at which the initiating device sends the reference signal through each transmit beam in the second transmit beam group is earlier than a time of a receive time domain resource corresponding to each transmit beam in the first transmit beam group.

With reference to the first aspect or the second aspect, in a possible implementation, the initiating device includes a first radio frequency channel and a second radio frequency channel.

The first indication information and the second indication information are simultaneously sent by the initiating device respectively through the first radio frequency channel and the second radio frequency channel.

In addition, a reference signal in the first transmit beam group and a reference signal in the second transmit beam group are simultaneously sent by the initiating device respectively through the first radio frequency channel and the second radio frequency channel.

A correlation between a reference signal sequence in a transmit beam in the first transmit beam group and a reference signal sequence in a transmit beam in the second transmit beam group is lower than a preset correlation threshold, or the two reference signal sequences are orthogonal to each other.

With reference to the first aspect or the second aspect, in a possible implementation, the reference signal is a training signal, or a signal including a short training field STF and a channel estimation field CEF, or a signal including an STF and a long training field LTF.

According to a third aspect, a beamforming training method is provided. The method includes:

A responding device receives first indication information sent by an initiating device. The first indication information is used to indicate a resource corresponding to each of a plurality of transmit beams of the initiating device, and the resource includes a time domain resource and/or a frequency domain resource.

The responding device receives a reference signal sent by the initiating device through each transmit beam.

The responding device determines feedback information based on the reference signal sent through each transmit beam.

The responding device sends the feedback information to the initiating device.

Specifically, in this embodiment of this application, the initiating device sends the first indication information and the plurality of reference signals. When receiving the first indication information, the responding device can obtain, by using the first indication information, the resources corresponding to the plurality of transmit beams. The responding device selects, by measuring the reference signals, a resource corresponding to a beam whose reference signal has the highest strength, to feed back information. For example, when the responding device learns, through measurement, that strength of a reference signal sent through a beam 1 is higher, the responding device may send the feedback information to the initiating device on a resource corresponding to the beam 1. When the initiating device detects, on the resource corresponding to the beam 1 by using a high-gain receive beam, the feedback information sent by the responding device, an insufficiency of uplink transmit power of the responding device can be compensated for, so that the initiating device can receive the feedback information sent by the responding device. Therefore, according to this embodiment of this application, a prior-art problem of insufficient uplink coverage can be resolved, thereby improving BFT performance.

According to a fourth aspect, a beamforming training method is provided. The method includes:

A responding device receives a first frame sent by an initiating device. The first frame includes first indication information and a plurality of reference signals. The first indication information is used to indicate a resource corresponding to each of a plurality of transmit beams of the initiating device, the resource includes a time domain resource and/or a frequency domain resource, and the plurality of reference signals are sent by the initiating device through the plurality of transmit beams.

The responding device determines feedback information based on the plurality of reference signals.

The responding device sends the feedback information to the initiating device.

Specifically, in this embodiment of this application, the initiating device sends the first frame. When receiving the first frame, the responding device can obtain, by using the first indication information, the resources corresponding to the plurality of transmit beams. The responding device selects, by measuring the reference signals, a resource corresponding to a beam whose reference signal has the highest strength, to feed back information. For example, when the responding device learns, through measurement, that strength of a reference signal sent through a beam 1 is higher, the responding device may send the feedback information to the initiating device on a resource corresponding to the beam 1. When the initiating device detects, on the resource corresponding to the beam 1 by using a high-gain receive beam, the feedback information sent by the responding device, an insufficiency of uplink transmit power of the responding device can be compensated for, so that the initiating device can receive the feedback information sent by the responding device. Therefore, according to this embodiment of this application, a prior-art problem of insufficient uplink coverage can be resolved, thereby improving BFT performance.

It should be understood that the method in the third aspect corresponds to that in the first aspect and the method in the fourth aspect corresponds to that in the second aspect. For a specific implementation and beneficial effects of the third aspect or the fourth aspect, refer to the foregoing descriptions. Detailed descriptions are properly omitted herein.

With reference to the third aspect or the fourth aspect, in a possible implementation, the feedback information is used to indicate an optimal transmit beam in the plurality of transmit beams.

It should be understood that, in this embodiment of this application, the feedback information may explicitly indicate the optimal transmit beam. For example, the feedback information may carry an identifier of the optimal transmit beam. Optionally, the feedback information may also implicitly indicate the optimal transmit beam. For example, when each transmit beam corresponds to only one resource, and when the responding device feeds back the feedback information on a resource, provided that the initiating device receives the feedback information on the resource, it may be determined that a transmit beam corresponding to the resource is the optimal transmit beam. In this case, the feedback information may also implicitly indicate the optimal transmit beam. The feedback information may be information in any form. This is not limited in this embodiment of this application.

With reference to the third aspect or the fourth aspect, in a possible implementation, that the responding device sends the feedback information to the initiating device includes:

The responding device sends the feedback information to the initiating device by using a resource corresponding to the optimal transmit beam.

With reference to the third aspect or the fourth aspect, in a possible implementation, a gain of a receive beam used by the initiating device to receive the feedback information is higher than a gain of a beam used to send the first indication information.

With reference to the third aspect or the fourth aspect, in a possible implementation, a gain of the transmit beam is higher than the gain of the beam used to send the first indication information.

With reference to the third aspect or the fourth aspect, in a possible implementation, the first indication information includes at least one of the following information:
indication information of each transmit beam, a start time of the time domain resource, duration of the time domain resource, slot information corresponding to the time domain resource, a start frequency of the frequency domain resource, a frequency domain width of the frequency domain resource, and a channel number corresponding to the frequency domain resource.

With reference to the third aspect or the fourth aspect, in a possible implementation, the first frame is a sector sweep frame, a beacon frame, or a directional multi-gigabit DMG beacon frame.

With reference to the third aspect or the fourth aspect, in a possible implementation, the first indication information is carried in a sector sweep frame, a beacon frame, or a directional multi-gigabit DMG beacon frame.

With reference to the third aspect or the fourth aspect, in a possible implementation, that the responding device receives a reference signal sent by the initiating device through each transmit beam includes:

The responding device receives reference signals simultaneously sent by the initiating device through at least two transmit beams. Reference signal sequences in any two of the at least two transmit beams have a low correlation or a low shift correlation, or are orthogonal to each other.

According to a fifth aspect, a beamforming training apparatus is provided, including modules or units configured to perform the method in any one of the first aspect or possible implementations of the first aspect, or the method in any one of the second aspect or possible implementations of the second aspect.

In an implementation, the apparatus is an initiating device.

According to a sixth aspect, a beamforming training apparatus is provided, including modules or units configured to perform the method in any one of the third aspect or possible implementations of the third aspect, or the method in any one of the fourth aspect or possible implementations of the fourth aspect.

In an implementation, the apparatus is a responding device.

According to a seventh aspect, a beamforming training apparatus is provided, including a transceiver, a processor, and a memory. The processor is configured to control the transceiver to receive and send a signal, the memory is configured to store a computer program, and the processor is configured to invoke the computer program from the memory and run the computer program, so that the apparatus performs the method in the first aspect or possible implementations of the first aspect, or the method in the second aspect or possible implementations of the second aspect.

In an implementation, the apparatus is an initiating device.

According to an eighth aspect, a beamforming training apparatus is provided, including a transceiver, a processor, and a memory. The processor is configured to control the transceiver to receive and send a signal, the memory is configured to store a computer program, and the processor is configured to invoke the computer program from the memory and run the computer program, so that the apparatus performs the method in the third aspect or possible implementations of the third aspect, or the method in the fourth aspect or possible implementations of the fourth aspect.

In an implementation, the apparatus is a responding device.

It should be understood that the initiating device may be an AP/PCP, and the responding device may be a STA. Alternatively, the responding device may be an AP/PCP, and the initiating device may be a STA.

According to a ninth aspect, a computer-readable medium is provided. The computer-readable medium stores a computer program; and when the computer program is executed by a computer, the method in any one of the first aspect or possible implementations of the first aspect, or the method in any one of the second aspect or possible implementations of the second aspect is implemented.

According to a tenth aspect, a computer-readable medium is provided. The computer-readable medium stores a computer program; and when the computer program is executed by a computer, the method in any one of the third aspect or possible implementations of the third aspect, or the method in any one of the fourth aspect or possible implementations of the fourth aspect is implemented.

According to an eleventh aspect, a computer program product is provided. When the computer program product is executed by a computer, the method in any one of the first aspect or possible implementations of the first aspect, or the method in any one of the second aspect or possible implementations of the second aspect is implemented.

According to a twelfth aspect, a computer program product is provided. When the computer program product is executed by a computer, the method in any one of the third aspect or possible implementations of the third aspect, or the method in any one of the fourth aspect or possible implementations of the fourth aspect is implemented.

According to a thirteenth aspect, a processing apparatus is provided, including a processor and an interface.

The processor is configured to perform the method in any one of the first aspect to the fourth aspect or possible implementations of the first aspect to the fourth aspect. A related data exchange process (for example, performing or receiving data transmission) is completed by using the interface. In a specific implementation process, the interface may further complete the foregoing data exchange process by using the transceiver.

It should be understood that, the processing apparatus in the thirteenth aspect may be a chip. The processor may be implemented by using hardware, or may be implemented by using software. When the processor is implemented by using the hardware, the processor may be a logic circuit, an integrated circuit, or the like; or when the processor is implemented by using the software, the processor may be a general-purpose processor, and is implemented by reading software code stored in the memory. The memory may be integrated into the processor, may be located outside the processor, and may exist independently. The memory and the processor may communicate with each other in wired or wireless manner.

According to a fourteenth aspect, a system is provided, including the foregoing initiating device and responding device.

### BRIEF DESCRIPTION OF DRAWINGS

FIG. 1 is a schematic diagram of a scenario to which an embodiment of this application can be applicable;
FIG. 2 is a schematic diagram of antenna arrays of phase antennas according to an embodiment of this application;
FIG. 3 is a schematic diagram of antenna arrays of phase antennas according to another embodiment of this application;
FIG. 4 is a schematic diagram of a beamforming training method according to an embodiment of this application;
FIG. 5 is a schematic diagram of a beamforming training method according to another embodiment of this application;
FIG. 6 is a schematic diagram of a beamforming training process according to an embodiment of this application;
FIG. 7 is a schematic diagram of a beamforming training process according to another embodiment of this application;
FIG. 8 is a schematic structural diagram of first indication information according to an embodiment of this application;
FIG. 9 is a schematic diagram of a time domain resource according to an embodiment of this application;
FIG. 10 is a schematic diagram of a beamforming training process according to another embodiment of this application;
FIG. 11 is a schematic diagram of a beamforming training process according to another embodiment of this application;
FIG. 12 is a schematic diagram of a beamforming training process according to another embodiment of this application;
FIG. 13 is a schematic diagram of a beamforming training process according to another embodiment of this application;
FIG. 14 is a schematic diagram of a beamforming training process according to another embodiment of this application;
FIG. 15 is a schematic diagram of an apparatus according to an embodiment of this application;
FIG. 16 is a schematic diagram of an initiating device according to an embodiment of this application;
FIG. 17 is a schematic diagram of an apparatus according to another embodiment of this application; and
FIG. 18 is a schematic diagram of a responding device according to an embodiment of this application.

### DESCRIPTION OF EMBODIMENTS

The following describes technical solutions in this application with reference to the accompanying drawings.

The technical solutions in the embodiments of this application may be applied to various communications systems, for example, a wireless local area network (wireless local area network, WLAN) system. Optionally, the embodiments of this application may be further applied to a system in which beamforming training needs to be performed, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a fifth generation (5th generation, 5G) system, or a new radio (new radio, NR), and the like.

The following uses only the WLAN system as an example to describe the application scenario of the embodiments of this application and the method in the embodiments of this application.

Specifically, the embodiments of this application may be applied to a wireless local area network (Wireless Local Area Network, WLAN), and the embodiments of this application may be applied to any protocol in the institute of electrical and electronics engineers (institute of electrical and electronics engineers, IEEE) 802.11 series currently used by the WLAN. The WLAN may include one or more basic service sets (basic service set, BSS). A network node in each of the basic service sets includes an access point (access point, AP) and a station (station, STA). Based on the original BSS, the IEEE 802.11ad introduces a personal basic service set (personal basic service set, PBSS) and a personal basic service set control point (PBSS control point, PCP). Each personal basic service set may include one AP/PCP and a plurality of stations associated with the AP/PCP.

Specifically, the initiating device and the responding device in the embodiments of this application may separately be a user station (STA) in the WLAN, and the user station may also be referred to as a system, a subscriber unit, an access terminal, a mobile station, a mobile console, a remote station, a remote terminal, a mobile device, a user terminal, a terminal, a wireless communications device, a user agent, a user apparatus, or user equipment (user equipment, UE) The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a wearable device, a computing device, or another processing device connected to a wireless modem.

In addition, alternatively, the initiating device and the responding device in the embodiments of this application may separately be an AP/PCP in the WLAN. The AP/PCP may be used to: communicate with the access terminal by using the wireless local area network, and transmit data of the access terminal to a network side, or transmit, to the access terminal, data that is from a network side.

In the embodiments of this application, the initiating device or the responding device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant communications software. In addition, a specific structure of an execution body of the method provided in the embodiments of this application is not specifically limited in the embodiments of this application, provided that a program that records code of the method provided in the embodiments of this application can be run to perform communication according to the method provided in the embodiments of this application. For example, the execution body of the method provided in the embodiments of this application may be the initiating device or the responding device, or a function module that can invoke and execute the program in the initiating device or the responding device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry an instruction and/or data.

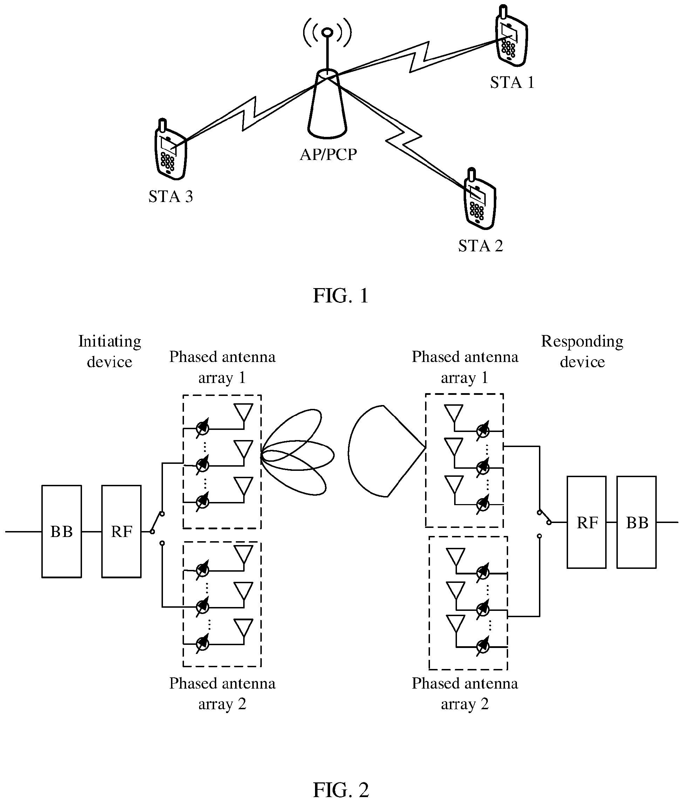

FIG. 1 is a schematic diagram of an application scenario according to an embodiment of this application. A scenario system shown in FIG. 1 may be a WLAN system. The WLAN system in FIG. 1 may include one or more APs/PCPs and one or more STAs. In FIG. 1, one AP/PCP and three STAs are used as an example. Wireless communication may be performed between the AP/PCP and each of the STAs according to various standards. The wireless communication between the AP/PCP and the STA may be performed by using a single-user multiple-input multiple-output (single-user multiple-input multiple-output, SU-MIMO) technology or a multi-user multiple-input multiple-output (multi-user multiple-input multiple-output, MU-MIMO) technology.

In this embodiment of this application, each station (STA) is equipped with one or more antennas. Each AP/PCP supports concurrent uplink transmission of multiple stations. Specifically, each of the stations or the AP/PCP includes an antenna with an adjustable beam, a radio frequency (radio frequency, RF) channel of a corresponding antenna, a signal processing module, a protocol module, and the like.

A connection between the antenna and the radio frequency channel may be a specified connection, or may be a switchable (switchable) connection. The radio frequency channel is connected to the signal processing module, to perform digital-to-analog or analog-to-digital conversion, and send and receive a signal. The signal processing module may generate a reference signal for measurement, receive the reference signal, and estimate signal strength, or estimate channel quality, or estimate a channel coefficient. The signal processing module is also connected to a local clock source to modulate a signal to a target frequency band or demodulate the signal. The local clock source can also provide a time reference for sending a specified protocol data unit (protocol data unit, PDU). The signal processing module may trigger sending of the specified PDU at specified time. The signal processing module is further connected to the protocol module, to perform packet encapsulation and decapsulation, and execute a packet receiving and sending sequence agreed in a protocol, including sending a training frame, receiving a training frame, returning a response frame, and the like. The signal processing module or the protocol module may further indicate a beam used by the antenna during transmission or reception.

Optionally, the station or the AP/PCP in this embodiment of this application may further include an external interface module. This embodiment of this application is not limited thereto.

First, to make the method in this embodiment of this application easier to understand, some concepts in this embodiment of this application is described below.

The beam in this embodiment of this application may be a wide beam, a narrow beam, or a beam of another type. A technology for forming a beam in this application may be a beamforming technology or another technical means. For example, the beamforming technology may specifically be a digital beamforming technology, an analog beamforming technology, or a hybrid digital/analog beamforming technology.

Beamforming is a method in which two or more communication parties implement a necessary transmission link budget for a subsequent communication process. In other words, a transmitted signal or/and a received signal is/are concentrated in a beam direction pointing to a receiver or a transmitter to enhance the signal, so that quality of the communication signal is improved. Beamforming training is a bidirectional beamforming frame transmission sequence procedure. Beam scanning and providing necessary signaling are used to enable the AP/STA to determine an appropriate antenna system setting for transmission and reception.

An antenna (or a directional multi-gigabit (directional multi-gigabit, DMG) antenna) is usually a single basic antenna including a phased array, or an aggregate formed by a series of antennas with switchable beams, and the aggregate may form a pseudo-omnidirectional directivity pattern. Regardless of which implementation, the antenna may be dynamically configured as a pseudo-omnidirectional directivity pattern for transmission or reception, or dynamically configured for transmission or reception for a specific sector or beam direction.

The radio frequency (radio frequency, RF) channel is a physical entity that may be used for a receive chain and/or a transmit chain, and is usually connected to the antenna by using an analog-to-digital converter (ADC) or a digital-to-analog converter (DAC). The radio frequency channel is used to: perform processing such as up/down-conversion, filtering, and power amplification (low noise amplification), and adjust the signal to suit the signal transmitted by a radio frequency antenna or convert the signal collected by the antenna into a signal suitable for sampling and baseband processing.

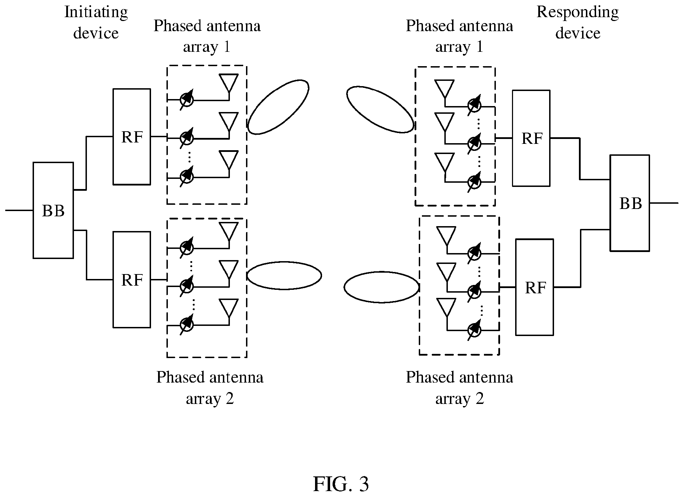

It should be noted that, in the IEEE 802.11ad, a plurality of DMG receive antennas or DMG transmit antennas may be supported. Each antenna herein actually refers to an antenna array, and is referred to as an antenna for short in this embodiment of this application. For example, FIG. 2 shows an antenna arrays of a phased antennas, in other words, one phased antenna array corresponds to one antenna. Each antenna may transmit and receive a signal by using a beam, or may transmit and receive a signal by using a quasi-omnidirectional manner. For example, an antenna of an initiating device shown in FIG. 2 transmits and receives a signal by using a beam, and a responder transmits and receives the signal by using a quasi-omnidirectional beam manner. It should be understood that, in the IEEE 802.11ad, although an initiating device and a responding device have a plurality of antennas, both the initiating device and the responding device support only a single radio frequency (radio frequency, RF) channel, to be specific, have only one receive chain and one transmit chain. However, in an application scenario in which MIMO is supported in the IEEE 802.11ay, for example, FIG. 3 is a schematic diagram of an initiating device and a responding device that support MIMO, in other words, the initiating device and the responding device may have a plurality of RFs. For example, in FIG. 3, the initiating device and the responding device each have two RFs.

In actual application, one RF is fixedly connected to only one specific antenna. Optionally, because RF costs are relatively high, a diversity effect may be obtained by a plurality of antennas. Therefore, it may be dynamically configured that one RF is connected to a specified antenna of the plurality of antennas.

It should be understood that, in this embodiment of this application, the initiating device and the responding device each may have one RF or may have a plurality of RFs. In addition, one RF may be connected to one antenna, or may be connected to a plurality of antennas. This is not limited in this embodiment of this application.

Before an embodiment of a beam training method in this embodiment of this application is described below, a beamforming training process in the existing 802.11 protocol is first described.

The beam training process in the IEEE 802.11ad standard may include an SLS phase, and may further include a BRP phase.

The SLS phase may specifically include three sub-phases: an initiator sector sweep (initiator sector sweep, ISS), a responder sector sweep (responder sector sweep, RSS), and a sector sweep feedback (sector sweep feedback, SSW-Feedback). Optionally, the SLS phase may further include a sector sweep acknowledgment (sector sweep ACK, SSW-ACK) sub-phase, so as to establish a basic link between the initiating device and the responding device. Specifically, in the ISS phase, the initiating device sends a plurality of sector sweep (sector sweep, SSW) frames or beacon frames including SSW fields, to perform training of a transmit sector or a receive sector of the initiating device. In other words, the ISS phase is a training process of a transmit beam or a receive beam of the initiating device. Similarly, the responding device sends an SSW frame in the RSS phase, to perform training of the transmit beam or the receive beam of the responding device. In the SLS phase, results of the ISS phase and the RSS phase are acknowledged through the SSW-Feedback phase and the SSW-ACK phase, and it is determined whether beam optimization needs to be performed.

It should be understood that, in the SLS phase, the initiating device or the responding device may send U frames including SSW fields to implement training of U beams. A space between different SSW frames or Beacon frames may be a short beamforming interframe space (short beamforming interframe space, SBIFS), or may be a long beamforming interframe space (long beamforming interframe space, LBIFS). In addition, in the SLS phase, a basic communication channel is also established between the initiating device and the responding device. The initiating device may obtain an optimal transmit sector sent to the responding device, and the responding device may also obtain an optimal transmit sector sent to the initiating device. In other words, a transmit beam may be selected, and a gain of the transmit beam may be used.

Further, when receive and transmit beams of the initiating device have reciprocity with each other, and receive and transmit beams of the responding device have reciprocity with each other, if a transmit sector is determined, a receive sector may be determined based on the reciprocity.

Training of the transmit beam and the receive beam of the initiating device and training of the transmit beam and the receive beam of the responding device can be completed by using the foregoing process.

However, in an existing BFT process, when training capabilities and/or transmit power of a transmitter and a receiver are/is different, uplink coverage and downlink coverage are asymmetric. For example, a signal sent by a party with higher transmit power can be received by a peer end, but a signal sent by a party with lower transmit power cannot be received by a peer end. This affects BFT performance.

For example, as shown in Table 1, in the ISS phase, when the initiating device, for example, an AP, performs beam scanning by using high power (for example, 15 dBm) and a high-gain beam (for example, 15 dBi), the responding device, for example, a STA, may receive a -75 dBm signal by using a receive beam (5 dBi).

In the RSS phase, when the STA performs transmission by using 5 dBm transmit power and a 5 dBi beam, if the AP performs reception by using a 15 dBi beam, a received signal strength is -85 dBm, which is much weaker than the -75 dBm signal received by the STA. When a receiver sensitivity of the receiver is between -85 dBm and -75 dBm, the STA can receive a signal of the AP, but the AP cannot receive an uplink signal of the STA. As a result, uplink coverage is insufficient (to be specific, the uplink coverage is smaller than downlink coverage).

**Table 1**

| | Downlink transmission parameter | Uplink transmission parameter |
|---|---|---|
| Transmit Power (Tx Power) | 15 dBm | 5 dBm |
| Transmit beam gain (Tx BF Gain) | 15 dBi | 5 dBi |
| Receive beam gain (Rx BF Gain) | 5 dBi | 15 dBi |
| Receive power (Rx Power) | -75 dBm | -85 dBm |

In view of the foregoing problem, an embodiment of this application provides a beamforming training method. The method can improve BFT performance. Specifically, in this embodiment of this application, an initiating device, for example, an AP, is enabled to provide a receiving time length with a high beam gain, so as to extend an uplink receiving range. In this way, the AP may compensate for an insufficiency of uplink transmit power of a STA by using a higher beamforming gain, thereby resolving a problem of insufficient uplink coverage.

For example, in this embodiment of this application, as shown in Table 2, the initiating device (for example, the AP) sends a reference signal by using a high-gain beam. For example, the gain is higher than the gain, for example, 24 dBi, of the beam used for beam scanning in Table 1. When a responding device (for example, the STA) still sends a response based on the parameters in Table 1, because a receive beam gain of the AP is increased, the AP may compensate for the insufficiency of the uplink transmit power of the STA by using the higher beamforming gain. Specifically, when the STA performs transmission by using 5 dBm transmit power and a 5 dBi beam, if the AP performs reception by using a 24 dBi beam, a received signal is -76 dBm, which is close to a -75 dBm signal received by the STA. This means that when the STA can receive a signal of the AP, the AP can also receive an uplink signal of the STA, in other words, the problem of the insufficient uplink coverage is resolved.

**Table 2**

| | Existing downlink transmission parameter | Downlink transmission parameter in this application | Existing uplink transmission parameter | Uplink transmission parameter in this application |
|---|---|---|---|---|
| Transmit Power (TxPower) | 15 dBm | 15 dBm | 5 dBm | 5 dBm |
| Transmit beam gain (Tx BF Gain) | 15 dBi | 24 dBi | 5 dBi | 5 dBi |
| Receive beam gain (Rx BF Gain) | 5 dBi | 5 dBi | 15 dBi | 24 dBi |
| Receive power (Rx Power) | -75 dBm | -66 dBm | -85 dBm | -76 dBm |

It should be understood that various values listed in Table 1 and Table 2 are merely examples. This embodiment of this application is not limited thereto.

As an example instead of a limitation, the following describes the solutions in this embodiment of this application in detail with reference to specific examples.

It should be understood that, in this embodiment of this application, the initiating device may be the AP/PCP, and the responding device may be the STA; or the initiating device may be the STA, and the responding device may be the AP/PCP. For ease of description, the following uses an example in which the initiating device is the AP and the responding device is the STA for description. However, this embodiment of this application is not limited thereto.

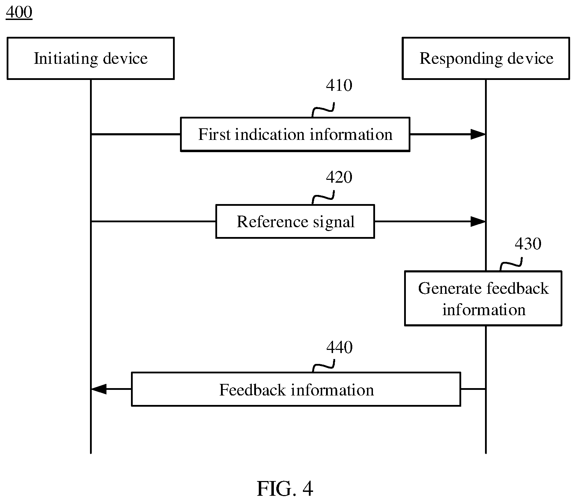

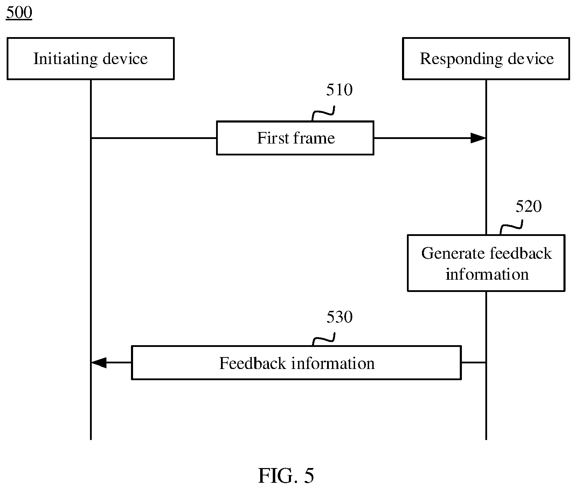

FIG. 4 is a schematic flowchart of a beamforming training method according to an embodiment of this application. FIG. 5 is a schematic flowchart of a beamforming training method according to another embodiment of this application. The methods shown in FIG. 4 and FIG. 5 may be applied to a WLAN system, and the WLAN system may include an initiating device and a plurality of responding devices.

A difference between FIG. 4 and FIG. 5 lies in that a relationship between first indication information and a reference signal that are sent by the initiating device is not limited in FIG. 4. In other words, in the embodiment in FIG. 4, the first indication information and the reference signal that are sent by the initiating device may be located in a same frame, or may be located in different frames. In the embodiment in FIG. 5, the initiating device sends a first frame, where the first frame includes the first indication information and a plurality of reference signals. In other words, the embodiment in FIG. 5 may be considered as a special case of the embodiment, in FIG. 4, in which the first indication information and the reference signal are located in the same frame. The following mainly describes an example in FIG. 4 in detail. For a feature that is in the embodiment in FIG. 5 and that is the same as that in FIG. 4, refer to the description in FIG. 4. Descriptions of FIG. 5 are appropriately omitted below.

The following first describes the method shown in FIG. 4. Specifically, a method 400 shown in FIG. 4 includes the following steps.

410: The initiating device sends the first indication information.

The first indication information is used to indicate a resource corresponding to each of a plurality of transmit beams, and the resource includes a receive time domain resource and/or a receive frequency domain resource.

Correspondingly, a responding device receives the first indication information.

Optionally, in an implementation, the first indication information may be carried in the first frame. Specifically, in step 410, the initiating device sends the first frame including the first indication information.

Optionally, the first frame may be a sector sweep (SSW) frame, a beacon frame, or a directional multi-gigabit DMG beacon frame.

It should be understood that, in this embodiment of this application, the resource that corresponds to each of the plurality of transmit beams and that is indicated by the first indication information may be used by the responding device to send feedback information, or may be used by the initiating device to detect feedback information.

It should be understood that, in this embodiment of this application, the first indication information may be sent in a direct-sequence spread-spectrum manner (for example, a format defined by a control PHY physical layer), or may be sent in another low-rate MCS, to obtain higher reliability. In actual application, the first indication information may alternatively be sent in another mode. This embodiment of this application is not limited thereto.

It should be understood that the first indication information may indicate only a time domain resource; to be specific, the resource corresponding to each transmit beam is the time domain resource. For example, the time domain resource may be a time period.

Alternatively, the first indication information may indicate only a frequency domain resource; to be specific, the resource corresponding to each transmit beam is the frequency domain resource. For example, the frequency domain resource may be a channel resource.

Alternatively, the first indication information may indicate a time-frequency resource; to be specific, the resource corresponding to each transmit beam is the time-frequency resource.

Optionally, in an embodiment, the first indication information includes at least one of the following information:
indication information of each transmit beam, a start time of the time domain resource, duration of the time domain resource, slot information corresponding to the time domain resource, a start frequency of the frequency domain resource, a frequency domain width of the frequency domain resource, and a channel number corresponding to the frequency domain resource.

It should be understood that the indication information of each transmit beam may be in a form of a bitmap. For example, the plurality of transmit beams are four transmit beams. In this case, when the bitmap is 0001 or 1110, it may represent a first transmit beam; and when the bitmap is 0100 or 1011, it may represent a third transmit beam, and so on.

It should be understood that, in the embodiments of this application, specific content of the first indication information is not limited to the foregoing listed information, provided that the first indication information can indicate the resource corresponding to each transmit beam. A person skilled in the art may make various variations to the first indication information based on the description of this application, and such a modification also falls within the protection scope of the embodiments of this application.

The initiating device indicates, by using the first indication information, the resource corresponding to each transmit beam. In this way, in a subsequent beam training process, the responding device may send, on the resource corresponding to the transmit beam, the feedback information based on an indication of the first indication information. Correspondingly, the initiating device detects the feedback information on the resource corresponding to each transmit beam.

Specifically, the initiating device may first send the first indication information, then send the reference signals through the plurality of transmit beams, and then detect, on the resource that correspond to each transmit beam and that is indicated by the first indication information, the feedback information sent by the responding device. It should be understood that, because the initiating device does not know a specific resource on which the responding device sends the feedback information, the initiating device detects the feedback information on resources corresponding to the transmit beams. Specifically, the initiating device detects the feedback information by using a receive beam corresponding to each transmit beam.

The responding device receives the reference signals sent through the plurality of transmit beams, and the responding device determines an optimal transmit beam in the plurality of transmit beams based on received signal strength of the reference signals. In this case, the responding device sends, on a resource corresponding to the optimal transmit beam, the feedback information to the initiating device. Because the initiating device detects the feedback information on all the resources, once the initiating device sends the feedback information on one of the resources, the initiating device can monitor the feedback information on the resource.

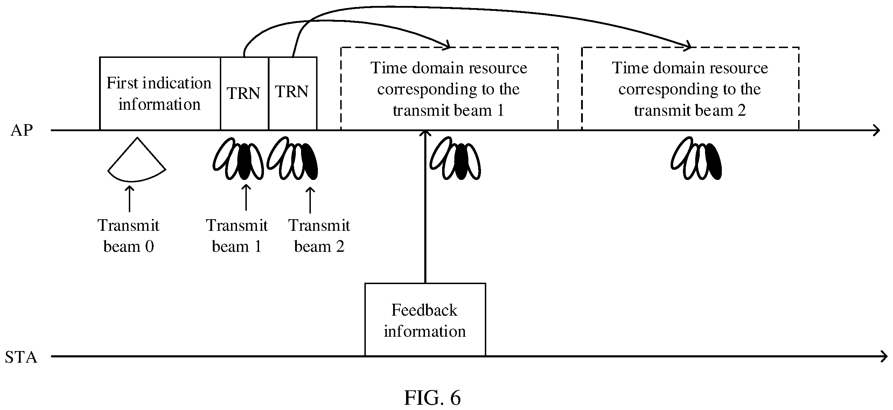

For example, FIG. 6 shows an example in which the initiating device is an AP, the responding device is a STA, the AP sends the first indication information through a low-gain beam, and the first indication information indicates time domain resources corresponding to two transmit beams, namely, a transmit beam 1 (beam 1 for short below) and a transmit beam 2 (beam 2 for short below). In addition, the transmit beam 1 and the transmit beam 2 are used to send a reference signal 1 and a reference signal 2 respectively. Each reference signal corresponds to a training (training, TRN) unit in FIG. 6, a TRN sequence is sent in each TRN unit in a beam direction, and the beam 1 and the beam 2 used by the TRN unit for transmission are high-gain beams. The gain may be higher than a beam gain of a transmit beam 0 (beam 0 for short below) used to send the first indication information. It is assumed that a coverage angle range of the beam 0 includes coverage angle ranges of the beam 1 and the beam 2.

It should be understood that the first indication information, the reference signal 1, and the reference signal 2 may belong to a same frame, or may belong to different frames. FIG. 6 shows a case in which the first indication information, the reference signal 1, and the reference signal 2 belong to the same frame (for example, the SSW frame). However, this embodiment of this application is not limited thereto.

Specifically, as shown in FIG. 6, the initiating device first sends the first indication information through the low-gain beam, for example, the beam 0. Optionally, the initiating device may further send the foregoing other information through the low-gain beam. Then, the initiating device sends, through the beam 1 and the beam 2, the reference signal 1 and the reference signal 2 at different angles. It is assumed that the STA is located in a coverage range of the beam 1. Because the coverage angle range of the beam 0 includes the coverage angle range of the beam 1, the STA can receive the first indication information, and determine, based on the first indication information, time domain resources corresponding to the beam 1 and the beam 2. Because the STA is located in the coverage angle range of the beam 1, strength of the reference signal 1 received by the STA is greater than strength of another reference signal. Therefore, the STA may generate the feedback information, and send the feedback information on the time domain resource corresponding to the beam 1.

420: The initiating device sends a reference signal through each transmit beam.

In other words, the initiating device sends the plurality of reference signals through the plurality of transmit beams. The plurality of reference signals are in one-to-one correspondence with the plurality of transmit beams.

Correspondingly, the responding device detects the reference signal sent through each transmit beam.

Optionally, in this embodiment of this application, the reference signal is a training signal, or a signal including a short training field (short training field, STF) and a channel estimation field (channel estimation field, CEF), or a signal including an STF and a long training field (long training field, LTF).

Optionally, the reference signal such as the STF/LTF may be generated by using a Golay sequence, and may be modulated in a pi/2-BPSK manner.

Optionally, the STF may include some of periodic signals (sequences), and may further include some of other signals used to represent STF termination. For example, the STF includes a periodic signal including a sequence of a basic length of 128.

Optionally, the LTF or the CEF may include one or more Golay complementary sequence pairs.

For example, as shown in FIG. 6, the initiating device sends, through the transmit beams, the reference signals in different directions. In the example shown in FIG. 6, each TRN unit may correspond to one reference signal. A TRN sequence is sent in each TRN unit in a beam direction.

Optionally, in this embodiment of this application, the first indication information and the plurality of reference signals may be carried in the same frame. For example, the first indication information and the plurality of reference signals are carried in the first frame. In this case, actions of sending the first indication information and sending the reference signal in 410 and 420 may correspond to step 510 in FIG. 5; to be specific, the initiating device sends the first frame, where the first frame includes the first indication information and the plurality of reference signals.

It should be understood that, in the embodiments of this application, the plurality of reference signals may be expressed as at least one reference signal. For example, the at least one reference signal may include one reference signal, two reference signals, or more reference signals. The embodiments of this application are not limited thereto.

It should be understood that, in the embodiments of this application, a quantity of reference signals may correspond to a quantity of transmit beams, and one transmit beam may be used to transmit one reference signal. In the embodiments of this application, the plurality of transmit beams may also be expressed as at least one transmit beam, and the at least one transmit beam may include one transmit beam, two transmit beams, or more transmit beams. The embodiments of this application are not limited thereto.

Alternatively, the first indication information and the plurality of signals may be separately located in different frames. For example, the first indication information is located in the sector sweep (SSW) frame, the beacon frame, or the directional multi-gigabit DMG beacon frame, and the plurality of reference signals are located in another frame. The embodiments of this application are not limited thereto.

It should be understood that, in this embodiment of this application, regardless of whether the first indication information and the plurality of reference signals are located in the same frame, the initiating device may send the first indication information and the plurality of reference signals by using different beams. In other words, in this embodiment of this application, the beam used to send the first indication information is different from the plurality of transmit beams used to send the plurality of reference signals.

For example, in this embodiment of this application, the beam used to send the first indication information may be the low-gain beam, and the plurality of transmit beams used to send the plurality of reference signals may be high-gain beams. In other words, each of gains of the plurality of transmit beams may be higher than a gain of the beam used to send the first indication information. For example, a coverage angle range of the beam used to send the first indication information is a sum of coverage angle ranges of the plurality of transmit beams. Different transmit beams in the plurality of transmit beams have different beam directions.

It should be understood that, in this embodiment of this application, the gain of the beam used to send the first indication information may be a gain of an antenna used to send the first indication information, or may be a gain of a beam obtained after beamforming is performed on an antenna used to send the first indication information. This embodiment of this application is not limited thereto.

It should be understood that, in this embodiment of this application, the frame (for example, the first frame) in which the first indication information is located may further carry other information. For example, the other information carried in the first frame includes an identity (for example, a MAC address or an AID) of the initiating device or an identifier (for example, an SSID or a BSSID) of a network in which the initiating device is located. The responding device may determine, based on the identity of the initiating device in the first frame that is received through detection, whether the first frame is from a beam training target device. If the first frame is from the beam training target device, measurement may be performed, and a report may be fed back or a response frame may be sent. If the first frame is not from the beam training target device, no measurement or response is required.

It should be understood that, in this embodiment of this application, when the first frame carries the other information, the initiating device may send the first indication information and the other information together by using the low-gain beam.

In the prior art, each sector sweep frame sent by the initiating device can be used to perform training in only one beam direction. When a plurality of beam directions need to be covered, a plurality of sector sweep frames need to be sent. In other words, content such as a MAC address in the sector sweep frame is repeatedly sent for a plurality of times, and efficiency is relatively low.

Because the content such as the MAC addresses in the sector sweep frames is the same, in this embodiment of this application, the other information such as the MAC address may be sent through a low-gain wide beam. Because a coverage angle range of the low-gain beam is relatively large, for example, is a sum of coverage ranges of the plurality of transmit beams, when the plurality of transmit beams are the M transmit beams, in this embodiment of this application, during training in M beam directions, the other information such as the MAC address may be transmitted only once, so that the other information such as the MAC address can be sent in the M beam directions. This avoids repeatedly sending the same information on the M transmit beams for a plurality of times. Therefore, this application can avoid repeated sending of information, reduce overheads, and improve beam training efficiency.

430: The responding device determines the feedback information based on the reference signal sent through each transmit beam.

For example, the responding device determines the feedback information based on strength of the plurality of reference signals sent through the plurality of transmit beams. For example, the responding device determines the feedback information based on a reference signal with highest receiving strength in the plurality of reference signals, and determines a transmit beam corresponding to the reference signal with the highest reference signal strength as an optimal transmit beam.

It should be understood that, in this embodiment of this application, the feedback information may explicitly indicate the optimal transmit beam. For example, the feedback information may carry an identifier of the optimal transmit beam. Optionally, the feedback information may also implicitly indicate the optimal transmit beam. For example, when each transmit beam corresponds to only one resource, and when the responding device feeds back the feedback information on a resource, provided that the initiating device receives the feedback information on the resource, it may be determined that a transmit beam corresponding to the resource is the optimal transmit beam. In this case, the feedback information may also implicitly indicate the optimal transmit beam. The feedback information may be information in any form. This is not limited in this embodiment of this application.

440: The responding device sends the feedback information to the initiating device.

Optionally, the responding device sends the feedback information on the resource corresponding to the optimal transmit beam.

Optionally, the feedback information is sent by the responding device through a sector sweep feedback. This embodiment of this application is not limited thereto.

Correspondingly, the initiating device detects, on the resource corresponding to each transmit beam, the feedback information sent by the responding device.

Optionally, when each transmit beam corresponds to only one resource, once the initiating device detects the feedback information on a resource, it may be determined that a transmit beam corresponding to the resource is the optimal transmit beam.

Optionally, when a plurality of transmit beams correspond to a same resource, the initiating device detects the feedback information on a resource, and the initiating device may determine the optimal transmit beam based on the identifier that is of the optimal transmit beam and that is carried in the feedback information.

Optionally, in another embodiment, that the initiating device detects, on the resource corresponding to each transmit beam, the feedback information that is sent by the responding device based on the reference signal includes:

The initiating device detects, on the resource corresponding to each transmit beam by using the receive beam corresponding to the transmit beam, the feedback information sent by the responding device.

It should be understood that, in this embodiment of this application, a receive beam corresponding to one transmit beam may meet at least one of the following conditions:

### Condition 1:

The receive beam corresponding to the transmit beam has reciprocity with the transmit beam.

It should be understood that, in the embodiments of this application, when a directivity pattern of the receive beam may be the same as a directivity pattern of the transmit beam, it may be considered that the receive beam has reciprocity with the transmit beam.

Alternatively, when a directivity pattern of the receive beam may be the same as or similar to a directivity pattern of the transmit beam (for example, a difference between gains of signals at angles in a relatively strong signal direction is less than a threshold, for example, 3 dB), it may be considered that the receive beam has reciprocity with the transmit beam.

Alternatively, the receive beam is wider than the transmit beam and covers a transmit beam direction. For example, half-power beamwidth (HPBW) of the receive beam is greater than HPBW of the transmit beam, and a direction angle of the receive beam is the same as a direction angle of the transmit beam. Further, a beam gain of the receive beam is limited to being not less than a value obtained by subtracting a preset value from a beam gain of the transmit beam.

### Condition 2:

A coverage angle range of the receive beam corresponding to the transmit beam includes a coverage angle range of the transmit beam.

Specifically, the coverage angle range of the receive beam corresponding to the transmit beam may be greater than the coverage angle range of the transmit beam.

Optionally, a plurality of transmit beams may correspond to a same receive beam. In other words, a coverage angle range of the receive beam may include coverage angle ranges of the plurality of transmit beams. Optionally, receiving time and/or receive frequency domains corresponding to the plurality of transmit beams are the same.

### Condition 3:

A distance between an antenna of the receive beam corresponding to the transmit beam and an antenna of the transmit beam meets a preset distance condition.

For example, a distance between the antenna of the receive beam corresponding to the transmit beam and the antenna of the transmit beam is the shortest or is less than a preset distance threshold.

Optionally, a gain of the receive beam is higher than the gain of the beam used to send the first indication information.

Specifically, the initiating device (for example, the AP) sends the first indication information and the plurality of reference signals. When the responding device (for example, the STA) receives the first indication information, the STA may obtain, by using the first indication information, the resources corresponding to the plurality of transmit beams (for example, TRN units). The STA selects, by measuring the TRN units (reference signals), a resource corresponding to a beam whose reference signal has the highest strength, to feed back information. For example, when the STA detects that strength of the reference signal sent through the beam 1 is higher, the STA may subsequently send the feedback information to the AP on the resource corresponding to the beam 1. For example, the STA sends a response frame (for example, a sector sweep response frame), where the response frame carries the feedback information. Because the AP uses the high-gain receive beam to detect, on the resource corresponding to the beam 1, the feedback information sent by the STA, an insufficiency of uplink transmit power of the STA may be compensated for. Further, the AP may receive the feedback information sent by the STA, thereby resolving a prior-art problem of insufficient uplink coverage.

For example, when the STA performs transmission by using 5 dBm transmit power and a 5 dBi beam, if the AP performs reception by using a 24 dBi beam, a received signal is -76 dBm, which is close to a -75 dBm signal received by the STA. This means that when the STA can receive a signal of the AP, the AP can also receive an uplink signal of the STA, thereby resolving the problem of insufficient uplink coverage.

It should be understood that, in this embodiment of this application, a solution of receiving the feedback information by using the receive beam corresponding to the transmit beam may exist independently. For example, the solution is not limited to a scenario in this embodiment of this application. For example, the solution may be applied to an existing scenario. Specifically, the initiating device sends a sweep frame, for example, the beacon frame or the SSW frame, in a plurality of transmit beam directions, and then detects, by using the receive beams corresponding to the plurality of transmit beams, the feedback information sent by the responding device. In this manner, the responding device that sends the feedback information can be in an angle range of the receive beam of the initiating device, so that the initiating device can receive the feedback information.

This avoids a problem that the initiating device cannot detect the feedback information because the responding device is outside a receiving angle of the initiating device.

The following describes a method shown in FIG. 5. Specifically, a method 500 shown in FIG. 5 includes the following steps.

510: An initiating device sends a first frame.

The first frame includes first indication information and a plurality of reference signals. The first indication information is used to indicate a resource corresponding to each of a plurality of transmit beams of the initiating device, the resource includes a time domain resource and/or a frequency domain resource, and the plurality of reference signals are sent by the initiating device through the plurality of transmit beams. Optionally, the plurality of reference signals are in one-to-one correspondence with the plurality of transmit beams.

Correspondingly, a responding device receives the first frame.

It should be understood that the initiating device may send the first indication information through a low-gain beam, and send a reference signal through a high-gain beam. Specifically, FIG. 5 may be considered as a special case of FIG. 4 in which the first indication information and the reference signal are located in a same frame. Specifically, for step 510, refer to the foregoing descriptions of steps 410 and 420 in FIG. 4. Details are not described herein again.

520: The responding device determines feedback information based on the plurality of reference signals.

Specifically, for step 520, refer to the description of step 430. Details are not described herein again.

530: The responding device sends the feedback information to the initiating device.

Correspondingly, the initiating device detects, on the resource corresponding to each transmit beam, the feedback information sent by the responding device.

Specifically, for step 530, refer to the description of step 440. Details are not described herein again.

Specifically, the initiating device sends the first frame. When the responding device (for example, a STA) receives the first frame, the STA may obtain, by using the first indication information in the first frame, resources corresponding to the plurality of transmit beams (for example, TRN units). The STA selects, by measuring the TRN units (reference signals), a resource corresponding to a beam whose reference signal has the highest strength, to feed back information. For example, when the STA detects that strength of a reference signal sent through a beam 1 is higher, the STA may subsequently send the feedback information to an AP on the resource corresponding to the beam 1. For example, the STA sends a response frame (for example, a sector sweep response frame), where the response frame carries the feedback information. Because the AP uses a high-gain receive beam to detect, on the resource corresponding to the beam 1, the feedback information sent by the STA, an insufficiency of uplink transmit power of the STA may be compensated for. Further, the AP may receive the feedback information sent by the STA, thereby resolving a prior-art problem of insufficient uplink coverage.

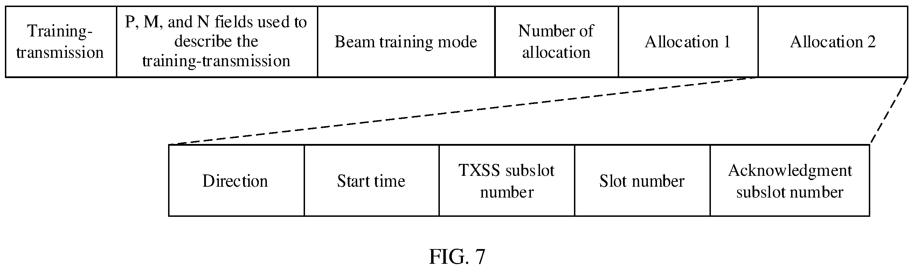

The foregoing describes a case in which the first indication information may be used to indicate the resource corresponding to each transmit beam. For example, the first indication information includes but is not limited to the information listed above. In the following, optionally, as an example instead of a limitation, a specific frame structure format of the first indication information is described below with reference to FIG. 7.

As shown in FIG. 7, the first indication information may include the following fields.

A training-transmission (TRN-T) field: in an implementation, the field is used to carry a reference signal, and the reference signal is used for beam training (or referred to as beamforming training).

A P field, an M field, and an N field that are used to describe training-transmission (TRN-T): the P field, the M field, and the N field can indicate an interval at which a reference signal is sent in another beam direction. It should be understood that, in actual application, the indication information may include a part or all of information in the three fields: the P field, the M field, and the N field. This embodiment of this application is not limited thereto. A value of the P field is used to indicate a quantity of TRN subfields that are in one TRN unit and that are sent by using a same AWV as a preamble and a data field, except a case in which a DMG antenna is replaced at the beginning of a TRN field during packet transmission. For example, the value of the P field may be 0 to 3. A value of the M field is used to indicate a quantity of TRN subfields in one TRN unit, and a transmitter may change the AWV at the beginning of the TRN subfields. In a TRN-R packet, the M field is a reserved field. A value of the N field is used to indicate a quantity of consecutive TRN subfields that use the same AWV in M TRN subfields.

A beam training mode field: when the field is a preset value, the initiating device is indicated to receive, in a specific mode, the feedback information sent by the responding device. Specifically, the receive direction corresponds to a sending direction of the TRN unit (reference signal). Optionally, when there are a plurality of training modes, the beam training mode field may exist. When there is only one training mode, the first indication information may not carry the field.

A number of allocation (number of allocation) field represents a quantity of resources. When one transmit beam corresponds to one resource, the number of allocation is equal to the quantity of transmit beams. When a plurality of transmit beams correspond to a same resource, the number of allocation is less than the quantity of transmit beams.

A plurality of allocation (allocation) fields, for example, include an allocation 1 field, an allocation 2 field, and the like, where each allocation field represents information about one resource.

Optionally, in this embodiment of this application, the first indication information may further carry a frequency domain allocation indication information field of a TRN-T signal. For example, the first indication information includes one or more of the following fields.

The TRN includes one or more TRN subfields. A transmitter of the TRN generates a sending signal in each TRN subfield based on one or more TRN sequences specified in a protocol.

A TRN subfield sequence length field indicates a length, for example, 128, 256, or 64, used by a TRN subfield sequence.

A TRN spatial flow quantity field is used to indicate a quantity of TRN spatial flows, that is, a quantity of TRN subfield sequences that are concurrently sent.

It should be understood that FIG. 7 shows only a frame structure form of the first indication information. In actual application, a corresponding variation may be made. This embodiment of this application is not limited thereto.

As shown in FIG. 7, that the first indication information indicates a receiving time period corresponding to each transmit beam is used as an example. In an example, each allocation field may have a plurality of forms, for example, may include slot information, a slot quantity, and the like. Optionally, frequency domain information may be further included. Optionally, when each allocation field includes time domain information and the frequency domain information, time periods and frequency domain ranges corresponding to two different allocation fields may be different, or may be partially the same. For example, the time periods are the same, but the frequency domain ranges are different, or the time periods are different, and the frequency domain ranges are the same.

FIG. 7 shows an example in which an allocation field includes time domain information. Specifically, as shown in FIG. 7, the allocation field includes the following fields.

A direction field (for example, is a training direction bitmap (TRN direction bitmap) and an antenna weighted vector (antenna weighting vector, AWV) identifier ID) represents sector information corresponding to a current allocation time period. For example, the sector is a sector used by the AP specified by the bitmap (bitmap) to send the TRN signal. For example, the initiating device sends four TRN units, a bitmap corresponding to the direction field is 1100, and two corresponding transmit beams APs use the two directions to receive the feedback information.

A start time (start time) field represents a start time of an allocation time period. It should be understood that, when the AP provides, in a sweep frame, a sweep frame number in a countdown manner, and after a plurality of scan frames end, a start time at which the AP performs reception in a receive direction is immediately a receiving time length corresponding to the first TRN unit. The allocation field may not include the start time field.

A TXSS subslot number (TXSS subslot number) represents a quantity of TXSS subslots in one slot (slot), that is, a quantity of frames for "the sector sweep sent by the STA".

A slot number (slot number) represents a quantity of slots.

An acknowledgment subslot number (ACK subslot number) represents a quantity of ACK subslots in an acknowledgment slot (ACK slot), that is, a quantity of frames used by the AP to respond to "the sector sweep sent by the STA".

It should be understood that the allocation field in FIG. 7 only needs to include at least two of the start time, the duration, and the end time. This embodiment of this application is not limited thereto.

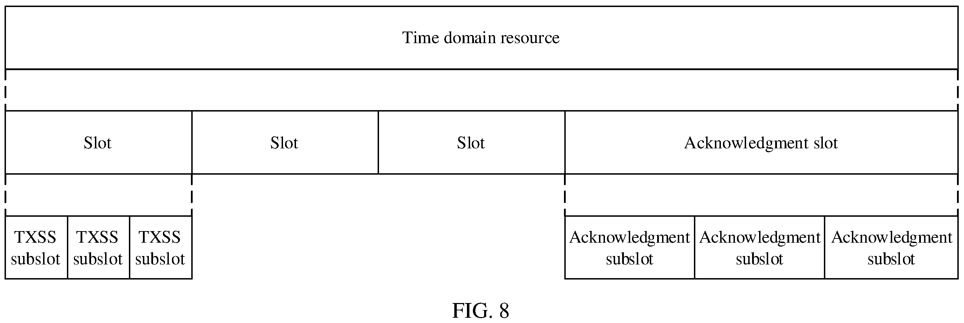

As shown in FIG. 8, corresponding to the allocation field in FIG. 7, when the resource is a time domain resource, the time domain resource may specifically include a plurality of slots (slot). As shown in FIG. 8, there are three slots and one acknowledgment slot (ack slot). Optionally, one slot may include a plurality of TXSS subslots. For example, as shown in FIG. 8, three TXSS subslots are included. One acknowledgment slot may include a plurality of acknowledgment subslots. For example, as shown in FIG. 8, three acknowledgment subslots are included.

It should be understood that values in the foregoing examples are merely examples. This embodiment of this application is not limited thereto.

It should be noted that, when a plurality of allocation fields are continuously placed in terms of time, a start time corresponding to a k^{th} allocation field may be obtained through calculation by accumulating a start time of the first allocation field and time occupied by first (k-1) allocation fields. Therefore, an i^{th} allocation field (i is greater than 1) may not include the start time field, and only the first allocation field includes the start time, or a field before the first allocation field includes the start time field.

It should be understood that the foregoing merely describes a case in which the responding device sends the feedback information on the resource corresponding to the optimal transmit beam. Optionally, in another embodiment, the responding device STA may select, based on signal strength or a signal quality measured by the TRN, or a channel obtained through estimation, or another implementation criterion, an optimal sector considered by the responding device. Then, the responding device selects a corresponding receiving time period to send the feedback information. When a resource corresponding to the optimal transmit beam is shown in FIG. 8,
the responding device, for example, the STA, may send the feedback information on a slot (slot) shown in FIG. 8. The initiating device detects the feedback information on a corresponding slot.

Specifically, the STA may select a subslot shown in FIG. 8 to send the feedback information, or may select a plurality of subslots to send one or more pieces of feedback information. This embodiment of this application is not limited thereto.

It should be understood that, in this embodiment of this application,
a manner in which the AP receives the feedback information sent by the STA in an agreed time period may be performed in different slots. In other words, a receive direction of a receive beam of an initiating device corresponds to a plurality of agreed slots.

For example, the feedback information is received in a receive direction 1 in all allocation time periods 1 to 4. Each of the allocation time periods may represent a slot, or may represent a time domain resource corresponding to a transmit beam.

Alternatively, a receive direction of a receive beam of an initiating device corresponds to an agreed allocation time period.

For example, the feedback information is received in the receive direction 1 to a receive direction 4 in the allocation time periods 1 to 4.

Alternatively, a plurality of receive directions correspond to one agreed receiving slot.

For example, the allocation time period 1 corresponds to the receive directions 1 and 2, the allocation time period 2 corresponds to the receive directions 3 and 4, or a plurality of receive directions correspond to a plurality of agreed receiving slots.

For example, the allocation time period 1 corresponds to the receive direction 1, the allocation time period 2 corresponds to the receive direction 1, the allocation time period 3 corresponds to the receive direction 1, and the allocation time period 4 corresponds to the receive direction 1.

It should be understood that, in actual application, the AP may be in a receiving state on the resource corresponding to the transmit beam. Optionally, in this embodiment of this application, the AP may be mainly in the receiving state on the resource corresponding to the transmit beam, or may be in a state of feeding back ACK to the STA. For example, as shown in FIG. 8, the AP is in the receiving state in the slot (slot) of the time domain resource, and is in the state of feeding back the ACK on the acknowledgment slot (ack slot).

The following describes the beamforming training method in this embodiment of this application with reference to a more specific example.

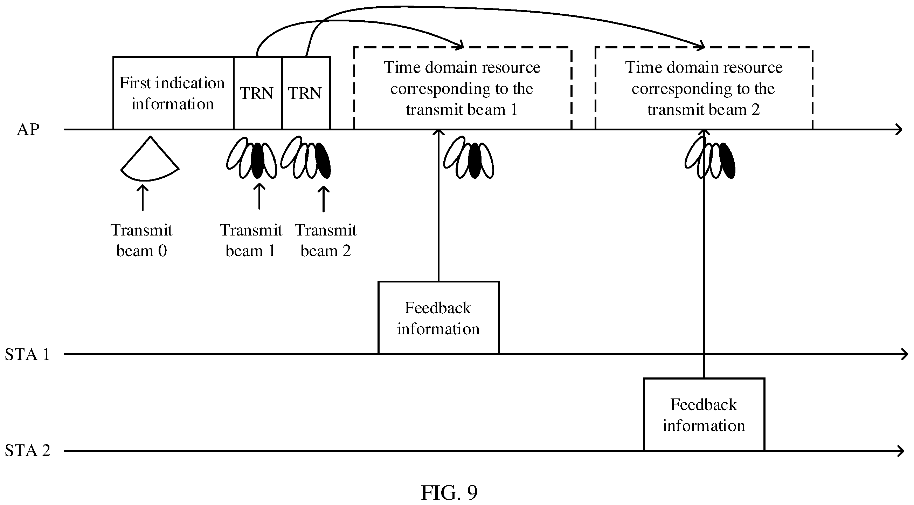

The foregoing describes a beamforming training process of an initiating device and a responding device with reference to FIG. 6. Optionally, in actual application, the initiating device may simultaneously perform beamforming training with a plurality of responding devices. An example in which there are two responding devices is described below with reference to FIG. 9.

For example, FIG. 9 shows an example in which an initiating device is an AP, responding devices are a STA 1 and a STA 2, the AP sends first indication information through a low-gain beam, and the first indication information indicates time domain resources corresponding to two transmit beams, namely, a transmit beam 1 and a transmit beam 2. In addition, the transmit beam 1 and the transmit beam 2 respectively send a reference signal 1 and a reference signal 2. Each reference signal corresponds to a training (training, TRN) unit in FIG. 9, a TRN sequence is sent in each TRN unit in a beam direction, and the beam 1 and the beam 2 used by the TRN unit for transmission are high-gain beams. The gain may be higher than a beam gain of a transmit beam 0 used to send the first indication information. It is assumed that a coverage angle range of the transmit beam 0 includes coverage angle ranges of the beam 1 and the beam 2.

It should be understood that the first indication information, the reference signal 1, and the reference signal 2 may belong to a same frame, or may belong to different frames. FIG. 9 shows a case in which the first indication information, the reference signal 1, and the reference signal 2 belong to the same frame (for example, an SSW frame). However, this embodiment of this application is not limited thereto.

Specifically, as shown in FIG. 9, the initiating device first sends the first indication information through the low-gain beam, for example, the beam 0. Optionally, the initiating device may further send the foregoing other information through the low-gain beam. Then, the initiating device sends, through the beam 1 and the beam 2, the reference signal 1 and the reference signal 2 at different angles. It is assumed that the STA 1 is located in a coverage range of the beam 1, and the STA 2 is located in a coverage range of the beam 2. Because the coverage angle range of the beam 0 includes the coverage angle ranges of the beam 1 and the beam 2, the STA 1 and the STA 2 can receive the first indication information, and determine, based on the first indication information, time domain resources corresponding to the beam 1 and the beam 2. Because the STA 1 is located in the coverage angle range of the beam 1, strength of the reference signal 1 received by the STA 1 is greater than strength of another reference signal. Therefore, the STA 1 may generate feedback information, and send the feedback information on the time domain resource corresponding to the beam 1. Because the STA 2 is located in the coverage angle range of the beam 2, strength of the reference signal 2 received by the STA 2 is greater than strength of another reference signal. Therefore, the STA 2 may generate the feedback information, and send the feedback information on the time domain resource corresponding to the beam 2. Correspondingly, the initiating device respectively detects, on the time domain resources corresponding to the beam 1 and the beam 2, the feedback information sent by the STA 1 and the feedback information sent by the STA 2, and the initiating device determines an optimal transmit beam corresponding to the STA 1 as the beam 1 and an optimal transmit beam corresponding to the STA 2 as the beam 2.

The foregoing describes an example in which the initiating device sends one piece of indication information. Optionally, in this embodiment of this application, the initiating device may send a plurality of pieces of indication information. For example, the initiating device may send a plurality of pieces of indication information through a plurality of frames, for example, send a plurality of pieces of indication information by using a plurality of SSW frames. Content of each piece of indication information is similar to the foregoing first indication information. Each frame may correspond to one transmit beam set, and a coverage angle range of a transmit beam of each frame includes an overall coverage angle range of a transmit beam set corresponding to the frame.

Optionally, each frame may further include a plurality of reference signals corresponding to the indication information in the frame.

Specifically, the following describes an example in which the initiating device sends two pieces of indication information.

Correspondingly, in another embodiment, the method in this embodiment of this application may further include:

The initiating device sends second indication information. The second indication information is used to indicate a resource corresponding to each transmit beam in a second transmit beam group. The second transmit beam group includes a plurality of transmit beams, a plurality of transmit beams indicated by the first indication information belong to a first transmit beam group, and transmit beams in the first transmit beam group are different from transmit beams in the second transmit beam group.

The initiating device sends a reference signal through each transmit beam in the second transmit beam group.

The initiating device detects, in a receiving time period corresponding to each transmit beam in the second transmit beam group, the feedback information sent by the responding device.

Optionally, the feedback information is used to indicate an optimal transmit beam in the second transmit beam group.

In other words, in this embodiment of this application, the first indication information may be sent through a low-gain beam, and the second indication information may be sent through another low-gain beam. A coverage angle range of the low-gain beam may include an overall coverage angle range of the first transmit beam group. A coverage angle range of the another low-gain beam may include an overall coverage angle range of the second transmit beam group.

It should be understood that for a specific description of the second indication information, refer to the description of the first indication information. To avoid repetition, details are not described herein again.

It should be further understood that both the second indication information and the plurality of reference signals sent by the second transmit beam group may be located in a second frame. This embodiment of this application is not limited thereto.

In this embodiment of this application, the first indication information may indicate resources corresponding to transmit beams in the first transmit beam group (referred to as a first group of resources for short). Similarly, the second indication information may indicate resources corresponding to transmit beams in the second transmit beam group (referred to as a second group of resources for short).

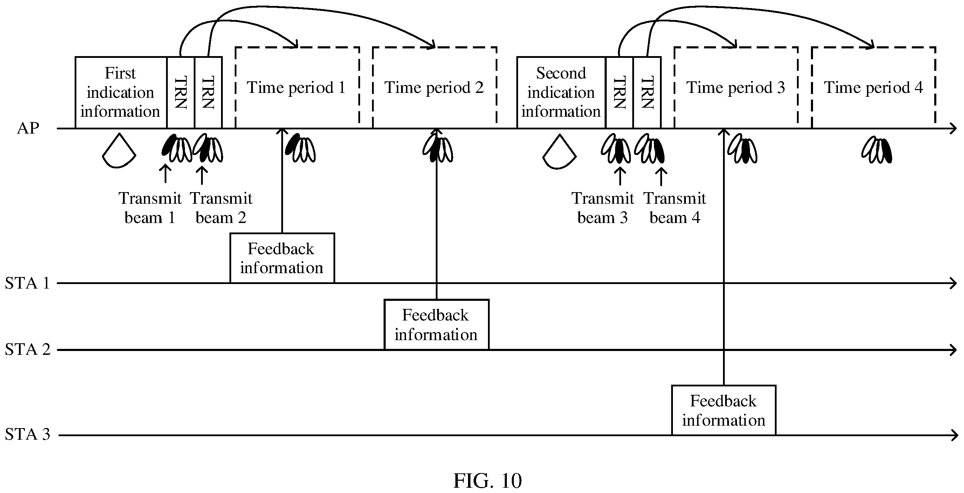

For example, the foregoing resource is a time domain resource. As shown in FIG. 10, a time at which the initiating device sends the reference signal through each transmit beam in the second transmit beam group is earlier than a time of the first group of resources. In other words, in chronological order, the initiating device first sends the first indication information, then transmits the reference signal by using the first transmit beam group, then corresponds to the time of the first group of resources, then transmits the second indication information, then transmits the reference signal by using the second transmit beam group, and finally transmits time of the second group of resources.

Specifically, as shown in FIG. 10, the first transmit beam group includes the beam 1 and the beam 2, the second transmit beam group includes a beam 3 and a beam 4, and the beam 1 to the beam 4 respectively correspond to time periods 1 to 4. If the STA 1 is located in the coverage angle range of the beam 1, the STA 2 is located in the coverage angle range of the beam 2, and the STA 3 is located in a coverage angle range of the beam 3, the STA 1 sends the feedback information in the time period 1, the STA 2 sends the feedback information in the time period 2, and the STA 3 sends the feedback information in the time period 3.

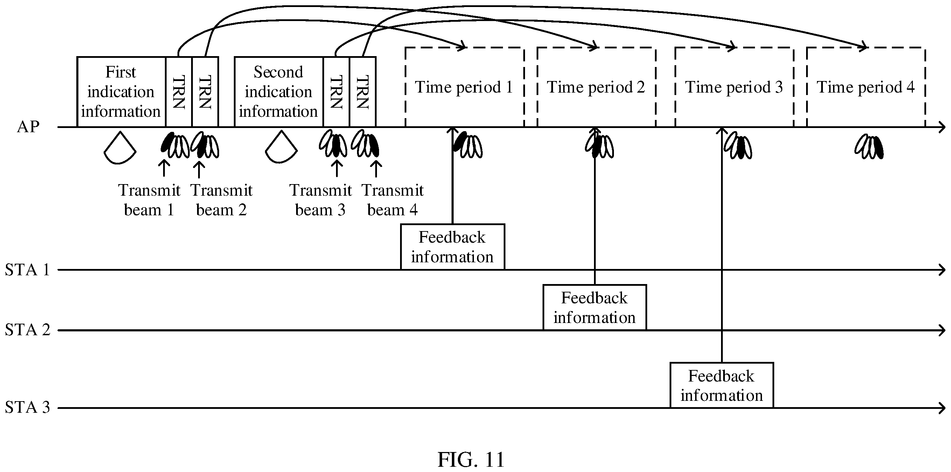

Alternatively, as shown in FIG. 11, a time at which the initiating device sends the second indication information is later than a time of the first group of resources. In other words, in chronological order, the initiating device first sends the first indication information, then transmits the reference signal by using the first transmit beam group, then transmits the second indication information, then transmits the reference signal by using the second transmit beam group, then corresponds to the time of the first group of resources, and finally transmits the time of the second group of resources.

Specifically, as shown in FIG. 11, the first transmit beam group includes the beam 1 and the beam 2, the second transmit beam group includes the beam 3 and the beam 4, and the beam 1 to the beam 4 respectively correspond to receiving time periods 1 to 4. If the STA 1 is located in the coverage angle range of the beam 1, the STA 2 is located in the coverage angle range of the beam 2, and the STA 3 is located in the coverage angle range of the beam 3, the STA 1 sends the feedback information in the time period 1, the STA 2 sends the feedback information in the time period 2, and the STA 3 sends the feedback information in the time period 3.

In other words, in this embodiment of this application, in an implementation, as shown in FIG. 11, after sending a series of sector sweep frames, the initiating device, for example, the AP, further provides a series of time lengths in time domain. In another implementation, as shown in FIG. 10, a sector sweep frame and a time length in time domain that are provided by the initiating device, for example, the AP, are interleaved in a time dimension.

The foregoing describes an example in which the initiating device sends only one SSW frame at a same moment in a time domain dimension. Optionally, when the initiating device has a plurality of RFs, for example, when the AP has a plurality of RFs, the AP may use a plurality of antennas to point to a plurality of beam directions to concurrently send a plurality of TRN units.

For example, in an embodiment, the following describes an example in which the initiating device includes a first radio frequency channel and a second radio frequency channel, and sends the first frame including the first indication information and the second frame including the second indication information.

For definitions of the first indication information and the second indication information, refer to the foregoing descriptions. Details are not described herein again.

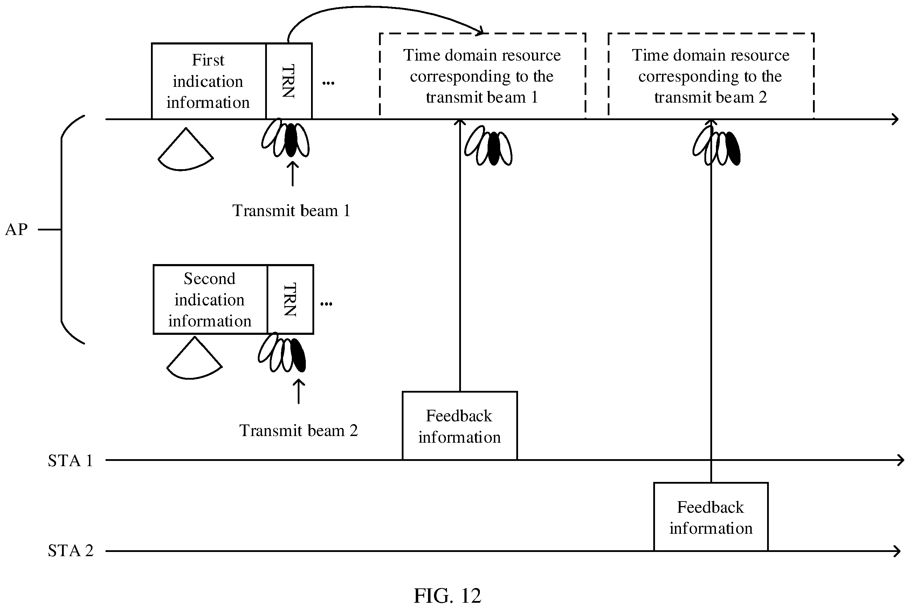

Specifically, as shown in FIG. 12, the initiating device may simultaneously send the first indication information and the second indication information through the first radio frequency channel and the second radio frequency channel.

In addition, the initiating device uses each transmit beam in the first transmit beam group to send the reference signal through the first radio frequency channel, and uses each transmit beam in the second transmit beam group to send the reference signal through the second radio frequency channel.

It should be understood that, in this embodiment of this application, a correlation between a reference signal sequence in a transmit beam in the first transmit beam group and a reference signal sequence in a transmit beam in the second transmit beam group is lower than a preset correlation threshold, or the two reference signal sequences are orthogonal to each other.

It should be understood that, in this embodiment of this application, that the correlation between the two reference signal sequences is less than the preset correlation threshold may represent that the two reference signal sequences have a low correlation or a low displacement correlation.

It should be understood that FIG. 12 shows a case in which receiving time periods of a plurality of transmit beams do not overlap. Optionally, because an AP may simultaneously perform reception by using a plurality of RF chains, for receive beams corresponding to a plurality of TRN beams, the initiating device may receive feedback information by using overlapped receiving time periods.

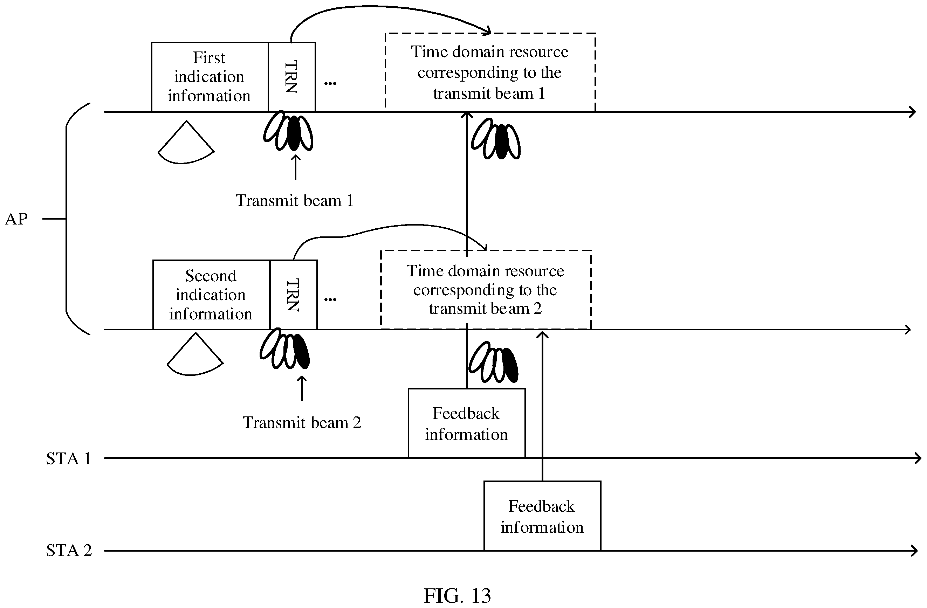

For example, as shown in FIG. 13, receiving time periods corresponding to two transmit beams completely overlap.

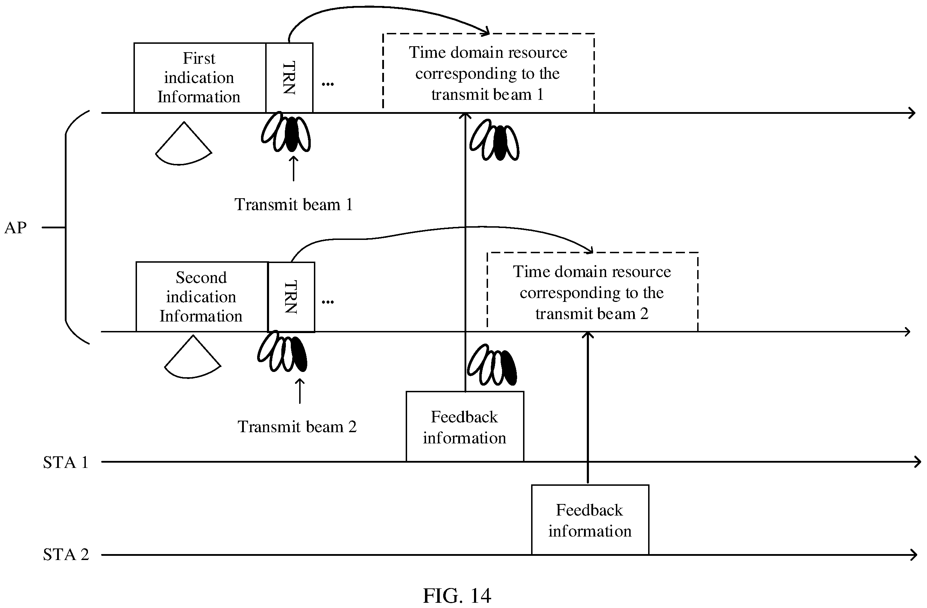

As shown in FIG. 14, receiving time periods corresponding to two transmit beams partially overlap.

It should be noted that the foregoing describes, with reference to FIG. 12 to FIG. 14, a case in which a quantity of RFs determines a quantity of frames being sent. Optionally, when a plurality of channels are used to simultaneously send the frames, content such as MAC addresses in the frames may be the same. In an embodiment, in this embodiment of this application, when the initiating device has a plurality of RFs, to avoid repeated sending of information such as the MAC address, only one frame may be sent. The frame carries one piece of indication information, and MAC address content corresponding to all transmit beams is the same. Then, the reference signals are simultaneously sent through all the RFs.

Correspondingly, in another embodiment, FIG. 12 to FIG. 14 may be transformed into a case in which only one piece of indication information is sent. The one piece of indication information is used to indicate a resource corresponding to each of a plurality of transmit beams. In this case, the initiating device simultaneously sends reference signals through at least two transmit beams. Reference signal sequences in any two of the at least two transmit beams have a low correlation or a low shift correlation, or are orthogonal to each other.

Specifically, the plurality of transmit beams include a plurality of transmit beam sets that are in one-to-one correspondence with a plurality of radio frequency (RF) channels. Each transmit beam set includes at least one transmit beam, and receiving time periods corresponding to two transmit beams in different transmit beam sets do not overlap, partially overlap, or completely overlap. That the initiating device sends the reference signal through each transmit beam includes: The initiating device simultaneously uses each transmit beam in the plurality of transmit beam sets to send the reference signal through the plurality of radio frequency channels. Reference signal sequences in transmit beams in two different transmit beam sets have a low correlation or a low shift correlation, or are orthogonal to each other.

Specifically, after completing sending of one piece of indication information, a solution in which the initiating device simultaneously sends the reference signals through the plurality of RFs and the initiating device detects the feedback information is similar to the foregoing solutions described in FIG. 12 to FIG. 14. To avoid repetition, details are not described herein again.

In this embodiment of this application, the initiating device such as the AP is enabled to provide a receiving time length with a high beam gain, so as to extend an uplink receiving range. In this way, the AP may compensate for an insufficiency of uplink transmit power of the STA by using a higher beamforming gain, thereby resolving a problem of insufficient uplink coverage.

It should be understood that the foregoing examples in FIG. 1 to FIG. 14 are merely intended to help a person skilled in the art understand the embodiments of this application, but are not intended to limit the embodiments of this application to a specific value or a specific scenario in the examples. A person skilled in the art may make various equivalent modifications or changes according to the examples shown in FIG. 1 to FIG. 14, and such modifications or changes also fall within the scope of the embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

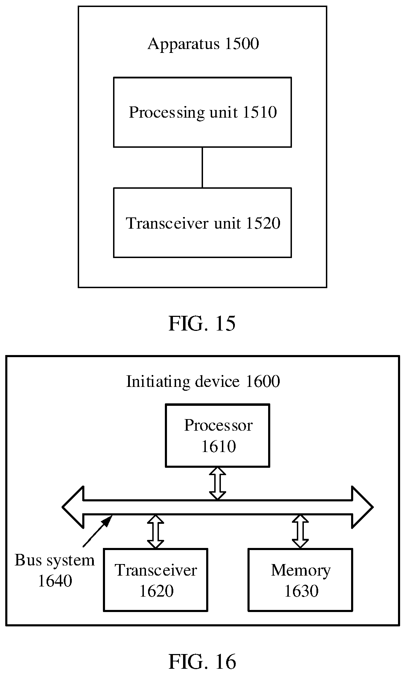

The foregoing describes in detail the method in the embodiments of this application with reference to FIG. 1 to FIG. 14. The following describes a beam training apparatus in the embodiments of this application with reference to FIG. 15 to FIG. 18.

FIG. 15 is a schematic structural diagram of a beam training apparatus according to an embodiment of this application. The apparatus 1500 may include:
a processing unit 1510 and a transceiver unit 1520.

In an implementation, the processing unit is configured to: control the transceiver unit to send first indication information, where the first indication information is used to indicate a resource corresponding to each of a plurality of transmit beams, and the resource includes a time domain resource and/or a frequency domain resource; send a reference signal through each transmit beam; and detect, on the resource corresponding to each transmit beam, feedback information sent by a responding device, where the feedback information is determined by the responding device based on the reference signal sent by each transmit beam.

Alternatively, in another implementation, the processing unit is configured to: control the transceiver unit to send a first frame, where the first frame includes first indication information and a plurality of reference signals, the first indication information is used to indicate a resource corresponding to each of a plurality of transmit beams of an initiating device, the resource includes a time domain resource and/or a frequency domain resource, and the plurality of reference signals are sent through the plurality of transmit beams; and detect, on the resource corresponding to each transmit beam, feedback information sent by a responding device, where the feedback information is determined by the responding device based on the plurality of reference signals.

Specifically, in this embodiment of this application, the initiating device sends the first indication information and the plurality of reference signals. When receiving the first indication information, the responding device can obtain, by using the first indication information, resources corresponding to the plurality of transmit beams. The responding device selects, by measuring the reference signals, a resource corresponding to a beam whose reference signal has the highest strength, to feed back information. For example, when the responding device learns, through measurement, that strength of a reference signal sent through a beam 1 is higher, the responding device may send the feedback information to the initiating device on a resource corresponding to the beam 1. When the initiating device detects, on the resource corresponding to the beam 1 by using a high-gain receive beam, the feedback information sent by the responding device, an insufficiency of uplink transmit power of the responding device can be compensated for, so that the initiating device can receive the feedback information sent by the responding device. Therefore, according to this embodiment of this application, a prior-art problem of insufficient uplink coverage can be resolved, thereby improving BFT performance.

Optionally, the transceiver unit is specifically configured to detect, on the resource corresponding to each transmit beam by using a receive beam corresponding to the transmit beam, the feedback information sent by the responding device.

A receive beam corresponding to one transmit beam meets at least one of the following conditions:

The receive beam corresponding to the transmit beam has reciprocity with the transmit beam.

A coverage angle range of the receive beam corresponding to the transmit beam includes a coverage angle range of the transmit beam.

A distance between an antenna of the receive beam corresponding to the transmit beam and an antenna of the transmit beam meets a preset distance condition.

Optionally, a gain of the receive beam is higher than a gain of a beam used to send the first indication information.

Optionally, a gain of the transmit beam is higher than the gain of the beam used to send the first indication information.

Optionally, the feedback information is used to indicate an optimal transmit beam in the plurality of transmit beams.

Optionally, the first indication information includes at least one of the following information:
indication information of each transmit beam, a start time of the time domain resource, duration of the time domain resource, slot information corresponding to the time domain resource, a start frequency of the frequency domain resource, a frequency domain width of the frequency domain resource, and a channel number corresponding to the frequency domain resource.

Optionally, the first frame is a sector sweep frame, a beacon frame, or a directional multi-gigabit DMG beacon frame.

Optionally, the first indication information is carried in a sector sweep frame, a beacon frame, or a directional multi-gigabit DMG beacon frame.

Optionally, the transceiver unit is specifically configured to simultaneously send reference signals through at least two transmit beams, where reference signal sequences in any two of the at least two transmit beams have a low correlation or a low shift correlation, or are orthogonal to each other.

It should be understood that the apparatus 1500 herein is embodied in the form of function units. The term "unit" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a merge logic circuit, and/or another suitable component that supports the described function. In an optional example, a person skilled in the art may understand that the apparatus 1500 provided in this application corresponds to the process performed by the initiating device in the method embodiment in FIG. 4 or FIG. 5. For functions of the units/modules in the apparatus, refer to the foregoing descriptions. Details are not described herein again.

It should be understood that the apparatus in FIG. 15 may be an initiating device, or may be a chip or an integrated circuit installed in an initiating device.

Using an initiating device as an example, FIG. 16 is a schematic structural diagram of an initiating device according to an embodiment of this application. As shown in FIG. 16, the initiating device 1600 may be applied to the system shown in FIG. 1, to execution the functions of the initiating device in the foregoing method embodiments.

As shown in FIG. 16, the initiating device 1600 may include a processor 1610 and a transceiver 1620. The processor 1610 is connected to the transceiver 1620. Optionally, the initiating device 1600 further includes a memory 1630, and the memory 1630 is connected to the processor 1610. Further optionally, the initiating device 1600 may further include a bus system 1640. The processor 1610, the memory 1630, and the transceiver 1620 may be connected by using the bus system 1640. The memory 1630 may be configured to store an instruction. The processor 1610 may correspond to the processing unit 1510, and the transceiver 1620 may correspond to the transceiver unit 1520. Specifically, the processor 1610 is configured to execute the instruction stored in the memory 1630, to control the transceiver 1620 to receive and send information or a signal.

It should be understood that in the embodiments of the present invention, the processor 1610 may be a central processing unit (central processing unit, CPU), or the processor 1610 may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor, or the like.

The memory 1630 may include a read-only memory and a random access memory, and provide an instruction and data to the processor 1610. A part of the memory 1630 may further include a nonvolatile random access memory. For example, the memory 1630 may further store information of a device type.

The bus system 1640 may further include a power bus, a control bus, a status signal bus, and the like, in addition to a data bus. However, for clear description, various types of buses in the figure are marked as the bus system 1640.

In an implementation process, steps in the foregoing method may be implemented by using a hardware integrated logic circuit in the processor 1610 or an instruction in a form of software. The steps of the method disclosed with reference to the embodiments of the present invention may be directly presented as being performed and completed by a hardware processor, or performed and completed by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory 1630, and the processor 1610 reads information in the memory 1630 and completes the steps in the foregoing method in combination with hardware of the processor. To avoid repetition, details are not described herein again.

It should be understood that, the initiating device 1600 shown in FIG. 16 can implement processes related to the initiating device in the method embodiment in FIG. 4 or FIG. 5. The operations and/or the functions of the modules in the initiating device 1600 are intended to implement corresponding procedures in the foregoing method embodiments. For details, refer to the descriptions in the foregoing method embodiments. To avoid repetition, detailed descriptions are properly omitted herein.

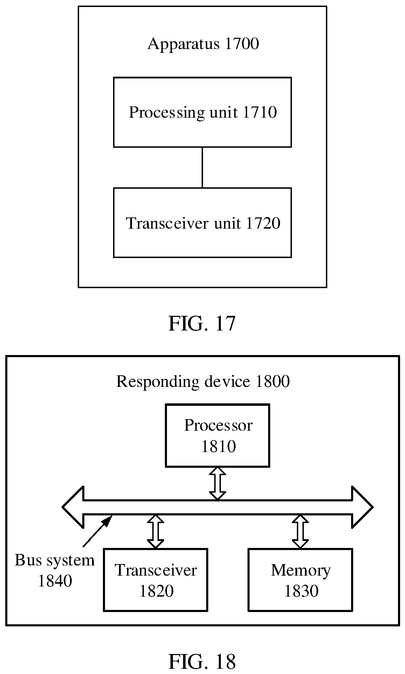

FIG. 17 is a schematic structural diagram of a beam training apparatus according to an embodiment of this application. The apparatus 1700 may include:
a processing unit 1710 and a transceiver unit 1720.

In an implementation, the transceiver unit is configured to: receive first indication information sent by an initiating device, where the first indication information is used to indicate a resource corresponding to each of a plurality of transmit beams of the initiating device, and the resource includes a time domain resource and/or a frequency domain resource; and receive a reference signal sent by the initiating device through each transmit beam. The processing unit is configured to determine feedback information based on the reference signal sent through each transmit beam. The transceiver unit is further configured to send the feedback information to the initiating device.

Alternatively,
in another implementation, the transceiver unit is configured to receive a first frame sent by an initiating device, where the first frame includes first indication information and a plurality of reference signals, the first indication information is used to indicate a resource corresponding to each of a plurality of transmit beams of the initiating device, the resource includes a time domain resource and/or a frequency domain resource, and the plurality of reference signals are sent by the initiating device through the plurality of transmit beams. The processing unit is configured to determine feedback information based on the plurality of reference signals. The transceiver unit is further configured to send the feedback information to the initiating device.

Specifically, in this embodiment of this application, the initiating device sends the first indication information and the plurality of reference signals. When receiving the first indication information, the responding device can obtain, by using the first indication information, resources corresponding to the plurality of transmit beams. The responding device selects, by measuring the reference signals, a resource corresponding to a beam whose reference signal has the highest strength, to feed back information. For example, when the responding device learns, through measurement, that strength of a reference signal sent through a beam 1 is higher, the responding device may send the feedback information to the initiating device on a resource corresponding to the beam 1. When the initiating device detects, on the resource corresponding to the beam 1 by using a high-gain receive beam, the feedback information sent by the responding device, an insufficiency of uplink transmit power of the responding device can be compensated for, so that the initiating device can receive the feedback information sent by the responding device. Therefore, according to this embodiment of this application, a prior-art problem of insufficient uplink coverage can be resolved, thereby improving BFT performance.

Optionally, the feedback information is used to indicate an optimal transmit beam in the plurality of transmit beams.

Optionally, the transceiver unit is specifically configured to send the feedback information to the initiating device by using a resource corresponding to the optimal transmit beam.

Optionally, a gain of a receive beam used by the initiating device to receive the feedback information is higher than a gain of a beam used to send the first indication information.

Optionally, a gain of the transmit beam is higher than the gain of the beam used to send the first indication information.

Optionally, the first indication information includes at least one of the following information:
indication information of each transmit beam, a start time of the time domain resource, duration of the time domain resource, slot information corresponding to the time domain resource, a start frequency of the frequency domain resource, a frequency domain width of the frequency domain resource, and a channel number corresponding to the frequency domain resource.

Optionally, the first frame is a sector sweep frame, a beacon frame, or a directional multi-gigabit DMG beacon frame.

Optionally, the first indication information is carried in a sector sweep frame, a beacon frame, or a directional multi-gigabit DMG beacon frame.

Optionally, the transceiver unit is specifically configured to receive reference signals simultaneously sent by the initiating device through at least two transmit beams, where reference signal sequences in any two of the at least two transmit beams have a low correlation or a low shift correlation, or are orthogonal to each other.

It should be understood that the apparatus 1700 herein is embodied in the form of function units. The term "unit" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a merge logic circuit, and/or another suitable component that supports the described function. In an optional example, a person skilled in the art may understand that the apparatus 1700 provided in this application corresponds to the process performed by the responding device in the method embodiment in FIG. 4 or FIG. 5. For functions of the units/modules in the apparatus, refer to the foregoing descriptions. Details are not described herein again.

It should be understood that the apparatus in FIG. 17 may be a responding device, or may be a chip or an integrated circuit installed in a responding device.

Using a responding device as an example, FIG. 18 is a schematic structural diagram of a responding device according to an embodiment of this application. As shown in FIG. 18, the responding device 1800 may be applied to the system shown in FIG. 1, to execution the functions of the responding device in the foregoing method embodiments.

As shown in FIG. 18, the responding device 1800 may include a processor 1810 and a transceiver 1820. The processor 1810 is connected to the transceiver 1820. Optionally, the responding device 1800 further includes a memory 1830, and the memory 1830 is connected to the processor 1810. Further optionally, the responding device 1800 may further include a bus system 1840. The processor 1810, the memory 1830, and the transceiver 1820 may be connected by using the bus system 1840. The memory 1830 may be configured to store an instruction. The processor 1810 may correspond to the processing unit 1710, and the transceiver 1820 may correspond to the transceiver unit 1720. Specifically, the processor 1810 is configured to execute the instruction stored in the memory 1830, to control the transceiver 1820 to receive and send information or a signal.

It should be understood that in the embodiments of the present invention, the processor 1810 may be a central processing unit, or the processor 1810 may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor, or the like.

The memory 1830 may include a read-only memory and a random access memory, and provide an instruction and data to the processor 1810. A part of the memory 1830 may further include a nonvolatile random access memory. For example, the memory 1830 may further store information of a device type.

The bus system 1840 may further include a power bus, a control bus, a status signal bus, and the like, in addition to a data bus. However, for clear description, various types of buses in the figure are marked as the bus system 1840.

In an implementation process, steps in the foregoing method may be implemented by using a hardware integrated logic circuit in the processor 1810 or an instruction in a form of software. The steps of the method disclosed with reference to the embodiments of the present invention may be directly presented as being performed and completed by a hardware processor, or performed and completed by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory 1830, and the processor 1810 reads information in the memory 1830 and completes the steps in the foregoing method in combination with hardware of the processor. To avoid repetition, details are not described herein again.

It should be understood that, the responding device 1800 shown in FIG. 18 can implement processes related to the responding device in the method embodiment in FIG. 4 or FIG. 5. The operations and/or the functions of the modules in the responding device 1800 are intended to implement corresponding procedures in the foregoing method embodiments. For details, refer to the descriptions in the foregoing method embodiments. To avoid repetition, detailed descriptions are properly omitted herein.

An embodiment of this application further provides a processing apparatus, including a processor and an interface. The processor is configured to perform communication method in any one of the foregoing method embodiments.

It should be understood that, the processing apparatus may be a chip. For example, the processing apparatus may be a field programmable gate array (field-programmable gate array, FPGA), an application-specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing method may be implemented by using a hardware integrated logic circuit in the processor or an instruction in a form of software. The steps of the method disclosed with reference to the embodiments of this application may be directly presented as being performed and completed by a hardware processor, or performed and completed by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that the processor in this embodiment of the present invention may be an integrated circuit chip and has a signal processing capability. In an implementation process, steps in the foregoing method embodiments may be implemented by using a hardware integrated logic circuit in the processor or an instruction in a form of software. The processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in the embodiments of the present invention. The general-purpose processor may be a microprocessor, or the processor may be any conventional processor, or the like. The steps of the method disclosed with reference to the embodiments of the present invention may be directly presented as being performed and completed by a hardware decoding processor, or performed and completed by a combination of hardware and a software module in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in the embodiments of the present invention may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate-synchronous dynamic random access memory (double Data Rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that memories in the system and method described in this specification include but are not limited to the memories and memories of any other proper types.

An embodiment of this application further provides a communications system, including the foregoing initiating device and responding device.

An embodiment of this application further provides a computer-readable medium. The computer-readable medium stores a computer program. When the computer program is executed by a computer, the beamforming training method in any one of the foregoing method embodiments is implemented.

An embodiment of this application further provides a computer program product. When the computer program product is executed by a computer, the beamforming training method in any one of the foregoing method embodiments is implemented.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

It should be understood that, although the foregoing describes a communication method in downlink transmission in a communications system, this application is not limited to this. Optionally, a solution similar to that in the foregoing description may also be used in uplink transmission. To avoid repetition, details are not described again herein.

In the foregoing apparatus embodiments, the network device and the terminal device completely correspond to the network device or the terminal device in the method embodiments. A corresponding module or unit performs a corresponding step. For example, a sending module (transmitter) performs a sending step in the method embodiments, and a receiving module (receiver) performs a receiving step in the method embodiments, except sending and receiving, other steps may be performed by a processing module (processor). For a function of a specific module, refer to a corresponding method embodiment. The sending module and the receiving module may form a transceiver module, and the transmitter and the receiver may form a transceiver, to jointly implement receiving and sending functions. There may be one or more processors.

In this application, "at least one" means one or more, and "a plurality of' means two or more. "And/Or" describes an association relationship for associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of the items, including any combination of singular items (pieces) or plural items (pieces). For example, at least one (one piece) of a, b, or c may indicate: a, b, c, a-b, a-c, b-c, or a-b-c, where a, b, and c may be singular or plural.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the entire specification does not necessarily refer to a same embodiment. In addition, the particular features, structures, or characteristics may be combined in one or more embodiments by using any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the internet interacting with another system by using the signal).

It should be further understood that, the first, second, third, fourth, and various numbers included in this specification are merely distinguished for convenient description, and are not intended to limit the scope of the embodiments of this application.

It should be understood that the term "and/or" in this specification describes only an association relationship for describing associated objects and represents that three relationships may exist. For example, A and/or B may represent the following three cases: Only A exists, both A and B exist, and only B exists.

A person of ordinary skill in the art may be aware that, in combination with illustrative logical blocks (illustrative logical block) described in the embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions (programs). When the computer program instructions (programs) are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, DVD), a semiconductor medium (for example, a solid state disk (SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A beamforming training method, comprising:
sending, by an initiating device, first indication information, wherein the first indication information is used to indicate a resource corresponding to each of a plurality of transmit beams of the initiating device, and the resource comprises a time domain resource and/or a frequency domain resource;
sending, by the initiating device, a reference signal through each transmit beam; and
detecting, by the initiating device on the resource corresponding to each transmit beam, feedback information sent by a responding device, wherein the feedback information is determined by the responding device based on the reference signal sent through each transmit beam.

2. A beamforming training method, comprising:
sending, by an initiating device, a first frame, wherein the first frame comprises first indication information and a plurality of reference signals, the first indication information is used to indicate a resource corresponding to each of a plurality of transmit beams of the initiating device, the resource comprises a time domain resource and/or a frequency domain resource, and the plurality of reference signals are sent by the initiating device through the plurality of transmit beams; and
detecting, by the initiating device on the resource corresponding to each transmit beam, feedback information sent by a responding device, wherein the feedback information is determined by the responding device based on the plurality of reference signals sent by the initiating device.

3. The method according to claim 1 or 2, wherein the detecting, by the initiating device on the resource corresponding to each transmit beam, feedback information sent by a responding device comprises:
detecting, by the initiating device on the resource corresponding to each transmit beam by using a receive beam corresponding to the transmit beam, the feedback information sent by the responding device, wherein
a receive beam corresponding to one transmit beam meets at least one of the following conditions:
the receive beam corresponding to the transmit beam has reciprocity with the transmit beam;
a coverage angle range of the receive beam corresponding to the transmit beam comprises a coverage angle range of the transmit beam; and
a distance between an antenna of the receive beam corresponding to the transmit beam and an antenna of the transmit beam meets a preset distance condition.

4. The method according to claim 3, wherein a gain of the receive beam is higher than a gain of a beam used to send the first indication information.

5. The method according to any one of claims 1 to 4, wherein a gain of the transmit beam is higher than the gain of the beam used to send the first indication information.

6. The method according to any one of claims 1 to 5, wherein the first indication information comprises at least one of the following information:
indication information of each transmit beam, a start time of the time domain resource, duration of the time domain resource, slot information corresponding to the time domain resource, a start frequency of the frequency domain resource, a frequency domain width of the frequency domain resource, and a channel number corresponding to the frequency domain resource.

7. A beamforming training method, comprising:
receiving, by a responding device, first indication information sent by an initiating device, wherein the first indication information is used to indicate a resource corresponding to each of a plurality of transmit beams of the initiating device, and the resource comprises a time domain resource and/or a frequency domain resource;
receiving, by the responding device, a reference signal sent by the initiating device through each transmit beam;
determining, by the responding device, feedback information based on the reference signal sent through each transmit beam; and
sending, by the responding device, the feedback information to the initiating device.

8. A beamforming training method, comprising:
receiving, by a responding device, a first frame sent by an initiating device, wherein the first frame comprises first indication information and a plurality of reference signals, the first indication information is used to indicate a resource corresponding to each of a plurality of transmit beams of the initiating device, the resource comprises a time domain resource and/or a frequency domain resource, and the plurality of reference signals are sent by the initiating device through the plurality of transmit beams;
determining, by the responding device, feedback information based on the plurality of reference signals; and
sending, by the responding device, the feedback information to the initiating device.

9. The method according to claim 7 or 8, wherein the sending, by the responding device, the feedback information to the initiating device comprises:
sending, by the responding device, the feedback information to the initiating device by using a resource corresponding to an optimal transmit beam.

10. The method according to any one of claims 7 to 9, wherein
a gain of a receive beam used by the initiating device to receive the feedback information is higher than a gain of a beam used to send the first indication information.

11. The method according to any one of claims 7 to 10, wherein
a gain of the transmit beam is higher than the gain of the beam used to send the first indication information.

12. The method according to any one of claims 7 to 11, wherein the first indication information comprises at least one of the following information:
indication information of each transmit beam, a start time of the time domain resource, duration of the time domain resource, slot information corresponding to the time domain resource, a start frequency of the frequency domain resource, a frequency domain width of the frequency domain resource, and a channel number corresponding to the frequency domain resource.

13. A beamforming training apparatus, comprising:
a transceiver unit and a processing unit, wherein
the processing unit is configured to: control the transceiver unit to send first indication information, wherein the first indication information is used to indicate a resource corresponding to each of a plurality of transmit beams, and the resource comprises a time domain resource and/or a frequency domain resource;
send a reference signal through each transmit beam; and
detect, on the resource corresponding to each transmit beam, feedback information sent by a responding device, wherein the feedback information is determined by the responding device based on the reference signal sent through each transmit beam.

14. A beamforming training apparatus, comprising:
a transceiver unit and a processing unit, wherein
the processing unit is configured to: control the transceiver unit to send a first frame, wherein the first frame comprises first indication information and a plurality of reference signals, the first indication information is used to indicate a resource corresponding to each of a plurality of transmit beams of an initiating device, the resource comprises a time domain resource and/or a frequency domain resource, and the plurality of reference signals are sent through the plurality of transmit beams; and
detect, on the resource corresponding to each transmit beam, feedback information sent by a responding device, wherein the feedback information is determined by the responding device based on the plurality of reference signals.

15. The apparatus according to claim 13 or 14, wherein the transceiver unit is specifically configured to detect, on the resource corresponding to each transmit beam by using a receive beam corresponding to each transmit beam, the feedback information sent by the responding device; and
a receive beam corresponding to one transmit beam meets at least one of the following conditions:
the receive beam corresponding to one transmit beam has reciprocity with the transmit beam;
a coverage angle range of the receive beam corresponding to one transmit beam comprises a coverage angle range of the transmit beam; and
a distance between an antenna of the receive beam corresponding to one transmit beam and an antenna of the transmit beam meets a preset distance condition.

16. The apparatus according to claim 15, wherein a gain of the receive beam is higher than a gain of a beam used to send the first indication information.

17. The apparatus according to any one of claims 13 to 16, wherein a gain of the transmit beam is higher than the gain of the beam used to send the first indication information.

18. The apparatus according to any one of claims 13 to 17, wherein the first indication information comprises at least one piece of the following information:
indication information of each transmit beam, start time of the time domain resource, duration of the time domain resource, slot information corresponding to the time domain resource, a start frequency of the frequency domain resource, a frequency domain width of the frequency domain resource, and a channel number corresponding to the frequency domain resource.

19. A beamforming training apparatus, comprising:
a transceiver unit, configured to: receive first indication information sent by an initiating device, wherein the first indication information is used to indicate a resource corresponding to each of a plurality of transmit beams of the initiating device, and the resource comprises a time domain resource and/or a frequency domain resource; and
receive a reference signal sent by the initiating device through each transmit beam;
a processing unit, configured to determine feedback information based on the reference signal sent through each transmit beam; and
the transceiver unit, further configured to send the feedback information to the initiating device.

20. A beamforming training apparatus, comprising:
a transceiver unit, configured to receive a first frame sent by an initiating device, wherein the first frame comprises first indication information and a plurality of reference signals, the first indication information is used to indicate a resource corresponding to each of a plurality of transmit beams of the initiating device, the resource comprises a time domain resource and/or a frequency domain resource, and the plurality of reference signals are sent by the initiating device through the plurality of transmit beams;
a processing unit, configured to determine feedback information based on the plurality of reference signals; and
the transceiver unit, further configured to send the feedback information to the initiating device.

21. The apparatus according to claim 19 or 20, wherein the transceiver unit is specifically configured to send the feedback information to the initiating device by using a resource corresponding to an optimal transmit beam.

22. The apparatus according to any one of claims 19 to 21, wherein
a gain of a receive beam used by the initiating device to receive the feedback information is higher than a gain of a beam used to send the first indication information.

23. The apparatus according to any one of claims 19 to 22, wherein
a gain of the transmit beam is higher than the gain of the beam used to send the first indication information.

24. The apparatus according to any one of claims 19 to 23, wherein the first indication information comprises at least one piece of the following information:
indication information of each transmit beam, start time of the time domain resource, duration of the time domain resource, slot information corresponding to the time domain resource, a start frequency of the frequency domain resource, a frequency domain width of the frequency domain resource, and a channel number corresponding to the frequency domain resource.
